(19) **Europäisches Patentamt European Patent Office Office européen des brevets**

(11) **EP 2 809 965 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(21) Anmeldenummer: **13700082.4**

(22) Anmeldetag: **08.01.2013**

(51) Int Cl.:
**F16D 25/0635** *(2006.01)* **F16D 25/12** *(2006.01)*

(86) Internationale Anmeldenummer:
**PCT/EP2013/050194**

(87) Internationale Veröffentlichungsnummer:
**WO 2013/113527 (08.08.2013 Gazette 2013/32)**

(54) **KUPPLUNGSANORDNUNG**

CLUTCH ARRANGEMENT

ENSEMBLE EMBRAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2012 DE 102012201507**

(43) Veröffentlichungstag der Anmeldung:
**10.12.2014 Patentblatt 2014/50**

(73) Patentinhaber: **ZF Friedrichshafen AG 88046 Friedrichshafen (DE)**

(72) Erfinder:
• **SCHRÖDER, Arthur 97456 Dittelbrunn (DE)**
• **SUDAU, Jörg 97464 Niederwerrn (DE)**
• **PITTNER, Daniel 97218 Gerbrunn (DE)**

(56) Entgegenhaltungen:
**EP-A1- 1 577 575     EP-A1- 1 798 435
EP-A2- 1 754 905     WO-A1-2011/045199**

**Beschreibung**

Ausführungsbeispiele beziehen sich auf eine Kupplungsanordnung, wie sie beispielsweise bei einem Antriebsstrang eines Fahrzeugs, beispielsweise eines Kraftfahrzeugs, zum Einsatz kommen kann.

Kupplungen werden in einer Vielzahl unterschiedlicher Ausprägungen im Fahrzeugbereich, insbesondere im Kraftfahrzeugbereich, eingesetzt. Häufig werden sie hier im Rahmen eines Antriebsstrangs eines solchen Fahrzeugs zur Drehmomentübertragung herangezogen, wobei sie beispielsweise zwischen einem Antriebsaggregat, also beispielsweise einem Motor, und einem nachgeschalteten Getriebe zum Einsatz kommen. Hierdurch kann eine Trennung des Antriebsstrangs ermöglicht werden, sodass beispielsweise auch im Falle eines Stillstands des Fahrzeugs der Motor weiterlaufen kann. Die Kupplung trennt in diesem Fall also die sich drehende Motorausgangswelle von einer stillstehenden Getriebeeingangswelle.

Kupplungen können auch bei anderen Konstellationen im Antriebsstrang eines Fahrzeugs eingesetzt werden. So können sie beispielsweise im Falle von Hybridantrieben gegebenenfalls auch zwischen zwei unterschiedlichen Antriebsaggregaten, oder auch zur wechselseitigen Trennung und Kopplung verschiedener Antriebsaggregate im Zusammenhang mit einer Getriebeeingangswelle herangezogen werden. Kupplungen können hierbei im Zusammenhang mit unterschiedlichen Antriebsaggregattechnologien, also beispielsweise Verbrennungsmotoren und Elektromotoren, sowie im Zusammenhang mit verschiedenen Getriebetechniken verwendet werden. Sie können so beispielsweise im Zusammenspiel mit synchronisierten, aber auch unsynchronisierten Getrieben zum Einsatz kommen. Auch kann es sich bei den betreffenden Getrieben um ein manuell geschaltetes Getriebe oder auch um ein Automatikgetriebe handeln, bei dem gegebenenfalls über elektrische, elektronische oder andere Steuerimpulse auch manuelle Gangwechsel einleitbar sind.

Kupplungen basieren hierbei häufig auf der Schaffung eines reibschlüssigen Kontaktes zwischen entsprechenden Bauteilen, die mit einem Antriebsbauteil und einem Abtriebsbauteil der betreffenden Kupplung gekoppelt sind. Gerade im Falle stark unterschiedlicher Drehzahlen, wie sie beispielsweise beim Anfahren auftreten können, wird hierbei im Bereich der betreffenden Reibflächen Energie in Wärme umgesetzt, die zu einer unerwünschten Aufheizung der betreffenden Reibflächen bzw. der entsprechenden Bauteile führen kann. Aus diesem Grund werden beispielsweise Kupplungen eingesetzt, bei denen im Inneren eines Gehäuses Öl zirkuliert, welches die an den Reibflächen generierte Wärme von diesen abführt.

So bezieht sich die DE 10 2009 016 414 A1 auf eine Kupplungsanordnung, bei der in einem Gehäuse der Kupplungsanordnung eine entsprechende Ölströmung aufgebaut wird. Auch die DE 101 25 628 A1 bezieht sich auf eine Kupplungsanordnung, bei der wenigstens ein Reiborgan zur Erzeugung einer reibschlüssigen Verbindung derart ausgebildet ist, um von dem Öl umströmt zu werden. Über die Reiborgane erfolgt hier die Drehmomentübertragung.

Bei dem Schaffen des reibschlüssigen Kontakts zwischen den entsprechenden Bauteilen, die die Reibflächen umfassen, wird entlang einer Kraftrichtung eine Anpresskraft erzeugt, auf der der reibschlüssige Kontakt basiert. In der Realität lässt sich hierbei häufig eine ungleichmäßige Kraftverteilung senkrecht zu der Kraftrichtung kaum vermeiden. Es ergibt sich so auf Basis der real wirkenden Anpresskräfte ein effektiver Reibradius bzw. Anpresskraftradius, an dem mathematisch idealisiert die Anpresskraft angreift bzw. wirkt.

Konstruktionsbedingt kann es nun zu einer Veränderung der Kraftverteilung während des Einkuppelns oder anderer Änderungen des Betriebszustands der Kupplung kommen. Hierdurch kann sich gerade während des Vorliegens von Drehzahldifferenzen an den betreffenden Reibflächen, also während eines Schlupfzustands der Kupplung, die mechanische Belastung der Reibflächen gegebenenfalls stark ändern. Der effektive Reibradius bzw. der effektive Anpresskraftradius gibt hierbei wenigstens einen Anhaltspunkt, wo eine maximale Belastung an den Reibflächen auftreten kann.

Durch eine während des Betriebs auftretende Änderung des Reibradius kann daher eine Abnutzung der Reibflächen ebenso einer Änderung unterworfen sein, wie beispielsweise auch eine Belastung der entsprechenden Komponenten. Diese können gegebenenfalls durch zusätzliche radial einwirkende Kräfte bzw. Kraftkomponenten auch anderen mechanischen Belastungen unterworfen sein, die zu unerwünschten Effekten führen oder zu diesen beitragen können. So kann es gegebenenfalls passieren, dass einzelne Komponenten der Kupplung während des Betriebs eher zu einem Verkanten neigen.

Die EP 1 754 905 A2 bezieht sich auf eine Kopplungsvorrichtung, die ein mit einem Antrieb verbundenes Gehäuse, einen Abtrieb und zumindest eine in dem Gehäuse aufgenommene, zwischen einer Einrückposition und einer Ausrückposition schaltbare Reibungskupplung aufweist, die als Kupplungsorgane wenigstens ein Anpressmittel und mindestens ein durch das Anpressmittel beaufschlagbares Kupplungselement aufweist. Die EP 1 577 575 A1 beschreibt eine Mehrscheibenkupplung, die ein Scheibenpaket aufweist. Die Scheiben werden durch ein Mittel in reibschlüssigen Kontakt gebracht. Das Verhältnis des mittleren Kraftangriffsradius und der mittlere Reibungsradius ist kleiner als oder gleich 1 und größer als 0.97 ist. Die EP 1 798 435 A1 beschreibt eine Dichtungsvorrichtung, die es unnötig macht, eine Blattfeder als separates Teil zwischen einem Metallring und einem passenden Element einzusetzen. Ferner bezieht sich die WO 2011/045199 A1 auf eine nasslaufende Kupplungsanordnung.

Es besteht daher ein Bedarf daran, eine Veränderung des effektiven Reibradius bzw. des effektiven Anpresskraftradius zu begrenzen.

Diesem Bedarf trägt eine Kupplungsanordnung gemäß Patentanspruch 1 Rechnung.

Eine Kupplungsanordnung, beispielsweise für einen Antriebsstrang eines Fahrzeugs, gemäß einem Ausführungsbeispiel umfasst so eine erste Reibfläche und eine zweite Reibfläche, die relativ zueinander entlang einer Drehachse der Kupplungsanordnung beweglich angeordnet und derart ausgebildet sind, um miteinander in einen Reibeingriff bringbar zu sein, um ein Drehmoment von der ersten Reibfläche auf die zweite Reibfläche übertragbar zu machen, wobei die erste Reibfläche oder die zweite Reibfläche an einem Bauteil angeordnet ist. Die Kupplungsanordnung umfasst ferner ein Anpresselement, das ausgebildet ist, um auf eine Betätigung hin den Reibeingriff durch ein Bewirken einer Kraft entlang der Drehachse zu schaffen oder zu trennen, wobei das Anpresselement eine Federstruktur umfasst, die derart ausgebildet und angeordnet ist, um durch eine Formänderung auf das Bauteil wenigstens teilweise die Kraft zu bewirken. Das Anpresselement umfasst ferner eine Anpressstruktur, die ausgebildet ist, sodass diese eine Formänderung der Federstruktur begrenzt.

Ausführungsbeispielen einer Kupplungsanordnung liegt so die Erkenntnis zugrunde, dass eine Veränderung des effektiven Reibradius bzw. des effektiven Anpresskraftradius dadurch begrenzt werden kann, indem durch das Vorsehen der Anpressstruktur die Formänderung der Federstruktur begrenzt wird. Die Federstruktur, die beispielsweise zur Verbesserung des Einkuppelverhaltens der Kupplungsanordnung dienen kann, ermöglicht zwar aufgrund der ihr innewohnenden Möglichkeit zur Formänderung und der dabei typischerweise mit dieser einhergehenden Erhöhung der Anpresskraft ein sanfteres Einkuppeln, die Formänderung der Federstruktur führt jedoch häufig gerade zu der oben beschriebenen Veränderung des effektiven Reibradius. Die Anpressstruktur des Anpresselements ermöglicht so gerade eine Begrenzung der Veränderung des Reibradius, indem die hierfür verantwortliche Formänderung der Federstruktur begrenzt wird, ohne dass jedoch das Einkuppelverhalten der Kupplungsanordnung durch einen Wegfall der Federstruktur signifikant verschlechtert wird und/oder ein erheblicher zusätzlicher Bauraumbedarf entlang der Drehachse (axiale Richtung) notwendig wird.

Bei einer Kupplungsanordnung gemäß einem Ausführungsbeispiel kann die Federstruktur eine Biegefederstruktur, beispielsweise eine blattfederartige, eine tellerfederartige, tellerfedersegmentartige, eine membranfederartige oder eine membranfedersegmentartige Struktur umfassen, die ausgebildet ist, um die Kraft durch ein Verbiegen entlang der Drehachse zu bewirken. Gerade bei einer solchen Federstruktur, bei der die Kraftentfaltung auf eine Verbiegung entlang der Drehachse zurückzuführen ist, kommt es gerade aufgrund der einer solchen Federstruktur innewohnenden Hebelgeometrie häufig zu einer Veränderung des effektiven Reibradius mit den zuvor beschriebenen negativen Auswirkungen.

Die Begriffe "effektiver Reibradius" und "effektiver Anpresskraftradius" können hierbei im Allgemeinen synonym verwendet werden, auch wenn sie sich grundsätzlich auf aufeinander senkrecht stehende Kraftkomponenten bzw. Kräfte beziehen. So wird der Begriff des effektiven Reibradius häufig im Zusammenhang mit tangential bzw. in Umfangsrichtung der Kupplungsanordnung wirkenden Kraftkomponenten verwendet, da diese zur eigentlichen Drehmomentübertragung beitragen. Im Unterschied hierzu wirken die Anpresskräfte im Wesentlichen in axialer Richtung, also entlang der Drehachse und stehen daher im Wesentlichen senkrecht auf den tangentialen Kraftkomponenten. Da jedoch in vielen Fällen in guter Näherung eine lineare Beziehung zwischen den tangential übertragbaren Kräften des Reibschlusses und der dem Reibschluss zugrunde liegenden Anpresskraft besteht, können die Begriffe "effektiver Anpresskraftradius" und "effektiver Reibkraftradius" im Allgemeinen synonym verwendet werden.

Beide ergeben sich hierbei über eine Gewichtung der Radiuswerte, an denen die entsprechenden tangentialen bzw. axialen Kräfte an den Reibflächen vorliegen, wobei die Gewichtung über die jeweilige, auf den betreffenden Punkt bezogene Kraft erfolgt. Ein Produkt aus dem effektiven Anpresskraftradius und der über die Reibflächen übertragenen gesamten Anpresskraft stimmt hierbei also mit einer Summation bzw. Integration der Produkte aus dem jeweiligen Radiuswert eines betrachteten Punkts und der an diesem Punkt herrschenden Anpresskraft überein. Die Summation bzw. Integration erfolgt hierbei über die vollständige Fläche der ersten bzw. zweiten Reibfläche, an deren Punkte die entsprechende Anpresskraft teilweise anliegt bzw. über die diese übertragen wird. Der jeweilige Radiuswert gibt hierbei den Abstand des betreffenden Punktes von der Drehachse an, während die Anpresskraft die entlang der Drehachse wirkende Kraftkomponente darstellt. Unabhängig hiervon kann der effektive Reibradius analog definiert werden, wenn anstelle der Anpresskräfte die tangentialen Kraftkomponenten verwendet werden, die zwischen der ersten und der zweiten Reibfläche übertragen werden bzw. an diesen vorliegen.

Bei einer Kupplungsanordnung gemäß einem Ausführungsbeispiel kann die erste und die zweite Reibfläche eine gemeinsame, flächenmäßig größte, wenigstens ringsegmentförmige Berührfläche aufweisen, an der die erste und die zweite Reibfläche einander berühren, wenn der Reibeingriff besteht, und bei der die Anpressstruktur derart ausgebildet ist, dass sich durch die Begrenzung der Formänderung der Federstruktur in einem vordefinierten Zustand der Kupplungsanordnung ein effektiver Reibradius ergibt, der von einer wenigstens kreisbogenförmigen Mittellinie der Berührfläche höchstens 40 % einer Breite derselben beabstandet ist. Die Berührfläche ist hierbei im Wesentlichen unterbrechungsfrei, kann jedoch beispielsweise auch durch Kanäle zum Durchströmen eines flüssigen Mediums unterbrochen sein. Die Berührfläche ist hierbei wenigstens ringsegmentförmig, kann also beispielsweise auch ringförmig ausgestaltet sein. Die Berührfläche weist so aufgrund ihrer wenigstens ringsegmentförmigen Ausgestaltung einen Innenradius und einen Außenradius auf, sodass sich die Breite der Berührfläche aus einer Differenz der beiden vorgenannten Radien ergibt, also als Differenz des Außenradius und des Innenradius der Berührfläche. Die kreisbogenförmige Mittellinie verläuft hierbei entlang des arithmetischen Mittels des Innenradius und des Außenradius, also bei einem Radiuswert, der einer Hälfte der Summe des Innenradius und des Außenradius entspricht. Der vordefinierte Zustand kann hierbei beispielsweise ein unverschlissener Zustand der Kupplungsanordnung bzw. ein neuwertiger Zustand der Kupplungsanordnung sein. Es kann sich jedoch bei diesem ebenfalls um einen Wartungszustand oder einen anderen vordefinierten Zustand handeln.

Hierdurch kann es bei einem Ausführungsbeispiel einer Kupplungsanordnung möglich sein, einen effektiven Reibradius zuverwirklichen, der gerade bei der Begrenzung der Formänderung durch die Anpressstruktur nahe an der kreisbogenförmigen Mittellinie der Berührfläche, also häufig nahe der Mittellinie der beiden Reibflächen, liegt. Hierdurch kann beispielsweise im Falle einer durch ein flüssiges Medium gekühlten Kupplungsanordnung gegebenenfalls eine Wärmeabfuhr, gegebenenfalls aber auch ein Verschließverhalten verbessert werden, selbst wenn bei einem Eingreifen der Anpressstruktur noch ein Drehzahlunterschied zwischen den beiden Reibflächen vorliegen sollte. So kann bei anderen Ausführungsbeispielen gegebenenfalls dieser Effekt weiter verbessert werden, wenn der genannte Reibradius höchstens 30 %, höchstens 25 %, höchstens 20 %, höchstens 15 % oder höchstens 10 % der Breite der Berührfläche von der kreisbogenförmigen Mittellinie derselben beabstandet ist.

Bei einer Kupplungsanordnung gemäß einem Ausführungsbeispiel können die Federstruktur und die Anpressstruktur derart ausgebildet sein, dass die Federstruktur auch dann wenigstens teilweise die Kraft auf das Bauteil überträgt, wenn die Anpressstruktur die Formänderung der Federstruktur begrenzt. Hierdurch kann es möglich sein, eine gleichmäßigere Belastung des Anpresselements und seiner beiden Komponenten, der Anpressstruktur und der Federstruktur, auch während eines voll eingekuppelten Zustands bzw. wenn die Anpressstruktur die Formänderung der Federstruktur begrenzt, zu ermöglichen. Auch dies kann gegebenenfalls zu einer verbesserten Kühlung bzw. zu einer Verbesserung des Verschleißverhaltens der Kupplungsanordnung beitragen.

Bei einer solchen Kupplungsanordnung gemäß einem Ausführungsbeispiel können die Federstruktur und die Anpressstruktur auch derart ausgebildet sein, dass die Federstruktur die Kraft auf das Bauteil im Wesentlichen vollständig überträgt, wenn die Anpressstruktur die Formänderung der Federstruktur begrenzt. Hierdurch kann es gegebenenfalls möglich sein, eine abrupte Veränderung des Reibradius bzw. des Anpresskraftradius zu unterbinden, wenn die Anpressstruktur die Formänderung der Federstruktur begrenzt.

Bei einer Kupplungsanordnung gemäß einem Ausführungsbeispiel kann die Anpressstruktur derart ausgebildet sein, dass die Anpressstruktur mit der Federstruktur in Kontakt tritt, wenn die Federstruktur einen vorbestimmten Grad der Formänderung erreicht, um die Formänderung der Federstruktur zu begrenzen. Bei dem Grad der Formänderung kann es sich beispielsweise um den Grad einer Verbiegung der Federstruktur handeln. Hierdurch kann es möglich sein, den Reibradius bzw. den Anpresskraftradius besser zu definieren bzw. festzulegen, wenn die Formänderung der Federstruktur durch die Anpressstruktur begrenzt wird.

Bei einer solchen Kupplungsanordnung gemäß einem Ausführungsbeispiel kann die Anpressstruktur einen der Federstruktur zugewandten Vorsprung aufweisen, der derart ausgebildet ist, dass die Anpressstruktur mit dem Vorsprung mit der Federstruktur in Kontakt tritt. Hierdurch kann es gegebenenfalls noch genauer möglich sein, den Reibradius bzw. Anpresskraftradius durch Positionierung des Vorsprungs zu definieren. So kann gegebenenfalls ein Abstand des Vorsprungs von der Drehachse den effektiven Reibradius bzw. die effektive Anpresskraft im Wesentlichen bestimmen.

Bei einer Kupplungsanordnung gemäß einem Ausführungsbeispiel können so die Federstruktur und die Anpressstruktur im Wesentlichen entlang eines im Wesentlichen linienförmigen Kontakts miteinander in Kontakt stehen, wenn die Anpressstruktur die Formänderung der Federstruktur begrenzt. Hierdurch kann es gegebenenfalls möglich sein, den Reibradius bzw. den Anpresskraftradius genauer zu definieren.

Bei einer Kupplungsanordnung gemäß einem Ausführungsbeispiel kann das Anpresselement ferner einen Verbindungsabschnitt aufweisen, der ausgebildet ist, um eine mechanische Verbindung zwischen der Federstruktur und der Anpressstruktur zu bilden. Bei einer solchen Kupplungsanordnung kann in einem im Wesentlichen entspannten Zustand der Federstruktur, bei dem die Federstruktur das Bauteil berührt und mit dem Verbindungsabschnitt verbunden ist, ein erster Abstand entlang der Drehachse zwischen der Federstruktur und dem Bauteil auf Höhe der Verbindungsstruktur wenigstens einem kleinsten, zweiten Abstand zwischen der Anpressstruktur und der Federstruktur entsprechen. Bei anderen Ausführungsbeispielen kann der erste Abstand auch größer als der zweite Abstand sein. Hierdurch kann es gegebenenfalls möglich sein, Bauraum entlang der Drehachse, also entlang der axialen Richtung der Kupplungsanordnung, einzusparen bzw. eine platzsparende Konstruktion zu implementieren.

Bei einer Kupplungsanordnung gemäß einem Ausführungsbeispiel kann die Federstruktur durch ein separates Federelement, beispielsweise eine Anlege-Tellerfeder, gebildet sein. In diesem Fall kann das Anpresselement eine Schulter aufweisen, die derart ausgebildet und angeordnet ist, dass das Federelement mit der Schulter in Kontakt steht, um die Kraft wenigstens teilweise auf das Bauteil zu übertragen. So kann bei einem solchen Ausführungsbeispiel die Verbindungsstruktur beispielsweise die Schulter umfassen. Durch die separate Implementierung des Federelements als Federstruktur kann es gegebenenfalls möglich sein, die mechanischen Eigenschaften der Federstruktur gezielter auf den geplanten Anwendungsbereich der Kupplungsanordnung abzustimmen. Gerade bei einer solchen Konstruktion kann eine Beschränkung des axialen Bauraums durch die zuvor beschriebene Ausgestaltung hinsichtlich des ersten und des zweiten Abstands vorteilhaft sein.

Bei einer Kupplungsanordnung gemäß einem Ausführungsbeispiel kann die Anpressstruktur derart ausgebildet und angeordnet sein, dass die Anpressstruktur mit dem Bauteil in Kontakt steht, wenn die Anpressstruktur die Formänderung der Federstruktur begrenzt. Hierdurch kann es gegebenenfalls möglich sein, eine zusätzliche Abstützung bzw. eine Vergrößerung der Anlagefläche des Anpresselements zu dem Bauteil zu erzielen. Hierdurch kann gegebenenfalls eine gleichmäßigere Verteilung der Kraft erzielbar sein, wenn die Anpressstruktur die Formänderung der Federstruktur begrenzt.

Bei einer Kupplungsanordnung gemäß der Erfindung können die erste und die zweite Reibfläche ausgebildet sind, um in einem Betrieb mit einem flüssigen Medium in Kontakt zu stehen. Das Anpresselement kann ferner eine Förderfläche (330) für das flüssige Medium umfassen, wobei die Förderfläche derart ausgebildet sein kann, dass diese einen Strom des flüssigen Mediums bei einer Drehung relativ zu dem flüssigen Medium bewirkt. Hierdurch kann es möglich sein, dass ein Strom des flüssigen Mediums in der Kupplungsanordnung hervorgerufen wird, welcher beispielsweise zur Abfuhr von an den ersten und zweiten Reibflächen erzeugter Wärme beitragen kann. Es kann so gegebenenfalls eine Kühlung der Kupplungsanordnung verbessert werden.

Bei einer solchen Kupplungsanordnung gemäß der Erfindung kann das Anpresselement derart ausgebildet sein, sodass die Förderfläche und die Federstruktur einteilig ausgeführt sind. Hierdurch kann es möglich sein, eine Förderung des flüssigen Mediums wenigstens teilweise durch das Bauteil zu bewirken, welches sowohl die Förderstruktur als auch die Förderfläche umfasst. Es kann so gegebenenfalls eine konstruktiv einfache Lösung implementierbar sein. Die Förderfläche und die Federstruktur können so beispielsweise aus einem blechartigen Werkstück geformt sein.

Bei einer Kupplungsanordnung gemäß der Erfindung können die erste und die zweite Reibfläche ausgebildet sein, um in einem Betrieb mit einem flüssigen Medium in Kontakt zu stehen. Sie kann ferner ein Förderbauteil umfassen, das wenigstens eine Förderfläche aufweist, wobei die Förderfläche derart ausgebildet sein kann, dass diese einen Strom des flüssigen Mediums bei einer Drehung relativ zu dem flüssigen Medium bewirkt. Hierdurch kann es möglich sein, dass ein Strom des flüssigen Mediums in der Kupplungsanordnung hervorgerufen wird, welcher beispielsweise zur Abfuhr von an den ersten und zweiten Reibflächen erzeugter Wärme beitragen kann. Es kann so gegebenenfalls eine Kühlung der Kupplungsanordnung verbessert werden.

Bei einer solchen Kupplungsanordnung gemäß der Erfindung kann die Federstruktur durch ein separates Federelement, beispielsweise eine Anlege-Tellerfeder, gebildet sein. Das Förderbauteil und/oder das Federelement können hierbei derart ausgebildet sein, sodass das Federelement über das Förderbauteil zentrierbar ist. Hierdurch kann gegebenenfalls eine Montage und damit eine Herstellung der Kupplungsanordnung gegebenenfalls vereinfacht werden. Ergänzend oder alternativ kann es gegebenenfalls auch möglich sein, einen Betrieb der Kupplungsanordnung weiter zu verbessern, indem aufgrund der Zentrierbarkeit gegebenenfalls radiale Kräfte zwischen dem Förderbauteil und dem Federelement austauschbar sind.

Bei einer Kupplungsanordnung gemäß einem Ausführungsbeispiel kann die Förderfläche derart ausgebildet und angeordnet sein, dass diese Teil einer Verzahnung ist, über die die erste Reibfläche antreibbar ist. Anders ausgedrückt kann die Förderfläche derart mit einem Bauteil, an dem die erste Reibfläche gebildet ist oder das die erste Reibfläche aufweist, in Eingriff steht, dass bei einer Bewegung Drehung des Förderbauteils oder des Anpresselements das Bauteil in eine Drehung versetzt wird. Das Anpresselement oder das Förderbauteil kann so ebenso dem Antrieb der ersten Reibfläche dienen.

Bei einer Kupplungsanordnung gemäß einem Ausführungsbeispiel mit einer Förderfläche kann die Förderfläche im Wesentlichen senkrecht zu einer tangentialen Richtung ausgerichtet sein, die senkrecht auf der Drehachse und einer von der Drehachse senkrecht wegweisenden radialen Richtung steht. Hierdurch kann es gegebenenfalls möglich sein, ein Auftreten axialer Kräfte gegebenenfalls zu reduzieren und/oder eine Förderung des flüssigen Mediums zu verbessern.

Bei einer Kupplungsanordnung gemäß einem Ausführungsbeispiel kann die Federstruktur eine erste Anpressfläche und die Anpressstruktur eine zweite Anpressfläche aufweisen, wobei die erste Anpressfläche an einer dem Bauteil zugewandten Seite der Federstruktur angeordnet und derart ausgebildet ist, sodass die erste Anpressfläche mit dem Bauteil in Kontakt steht und über die erste Anpressfläche die Kraft wenigstens teilweise stets dann bewirkt wird, wenn das Anpresselement den Reibeingriff schafft. Die zweite Anpressfläche kann an einer dem Bauteil zugewandten Seite der Anpressstruktur angeordnet und derart ausgebildet sein, sodass die zweite Anpressfläche mit dem Bauteil in Kontakt steht und über die zweite Anpressfläche die Kraft wenigstens teilweise bewirkt, wenn die Anpressstruktur die Formänderung der Federstruktur begrenzt. Wird also von dem Anpresselement der Reibeingriff geschaffen, steht die erste Anpressfläche der Federstruktur stets mit dem Bauteil in Kontakt, während die zweite Anpressstruktur zusätzlich dann mit dem Bauteil in Kontakt tritt, wenn die Anpressstruktur die Formänderung der Federstruktur begrenzt. Hierdurch kann also die Kraft wenigstens teilweise kontinuierlich über die erste Anpressfläche bereitgestellt werden. Die zweite Anpressfläche tritt hinzu, wenn die Formänderung der Federstruktur durch die Anpressstruktur begrenzt wird.

Bei einer solchen Kupplungsanordnung gemäß einem Ausführungsbeispiel kann das Anpresselement derart ausgebildet sein, dass eine Gesamtfläche der Projektionen der ersten Anpressfläche und der zweiten Anpressfläche im Wesentlichen vollständig eine Projektion einer Überlappfläche der ersten und der zweiten Reibfläche umfasst. Anders ausgedrückt kann das Anpresselement die Kraft zum Schaffen des Reibeingriffs über eine Fläche bereitstellen, die größer als die Überlappfläche der ersten und der zweiten Reibfläche umfasst. Diese werden daher gleichmäßiger aufeinander aufgepresst, wodurch gegebenenfalls eine Veränderung des Reibradius weiter begrenzt werden kann. Die erste Anpressfläche und die zweite Anpressfläche können hierbei auch mehrteilig ausgeführt sein, wobei die entsprechenden Anpressflächen in diesem Fall durch sämtliche, gegebenenfalls auch nur eine Mehrzahl ihrer Teile gebildet werden können. Die entsprechenden Teile der ersten und/oder zweiten Anpressflächen können hierbei beispielsweise auf mehrere Anpressstrukturen bzw. Federstrukturen verteilt sein. Selbstverständlich können Ausführungsbeispiele einer Kupplungsanordnung entsprechend auch eine Mehrzahl von Anpressstrukturen und/oder Federstrukturen umfassen, deren Anzahl nicht übereinstimmen muss, sondern verschieden sein kann.

Bei einer solchen Kupplungsanordnung gemäß einem Ausführungsbeispiel können die Anpressstruktur und die Federstruktur einstückig ausgebildet sein. Hierdurch kann gegebenenfalls eine Herstellung der Kupplungsanordnung vereinfacht werden. Alternativ oder ergänzend kann hierdurch gegebenenfalls auch ein Bauraum in axialer Richtung, also entlang der Drehachse, eingespart werden.

Bei einer solchen Kupplungsanordnung gemäß einem Ausführungsbeispiel können die Anpressstruktur und die Federstruktur aus einem blechartigen Bauteil gefertigt sein, wobei die Federstruktur als eine Ausstellung aus dem blechartigen Bauteil ausgeführt ist. Hierdurch kann gegebenenfalls eine Herstellung weiter vereinfacht werden.

Bei einer Kupplungsanordnung gemäß einem Ausführungsbeispiel mit den zuvor beschriebenen ersten und zweiten Anpressflächen können die erste und die zweite Anpressfläche derart ausgebildet sein, dass das Anpresselement im Wesentlichen entlang seines vollständigen Umfangs auf Höhe seines effektiven Reibradius mit dem Bauteil in Kontakt steht, wenn die Anpressstruktur die Formänderung der Federstruktur begrenzt. Hierdurch kann gegebenenfalls eine entlang des Umfangs der Kupplungsanordnung gleichmäßige Verteilung der Kraft erzielt werden, sodass gegebenenfalls entlang des Umfangs Variationen des effektiven Reibradius bzw. des effektiven Anpresskraftradius reduziert werden können.

Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch geometrische Verbindung der betreffenden Verbindungspartner zustande. Die Haftreibung setzt somit insbesondere eine Normalkraftkomponente zwischen den beiden Verbindungspartnern voraus.

Die Kupplungsanordnung gemäß einem Ausführungsbeispiel kann beispielsweise eine Einscheibenkupplung, eine Zweischeibenkupplung oder - allgemein gesprochen - eine Mehrscheibenkupplung darstellen. Sie kann beispielsweise eine Anfahrkupplung im Zusammenhang mit einem unsynchronisierten Getriebe (z. B. Automatikgetriebe) oder eine Trennkupplung im Zusammenhang mit einem synchronisierten Getriebe darstellen.

Nachfolgend werden unter Bezugnahme auf die beigefügten Figuren Ausführungsbeispiele näher beschrieben und erläutert.

Fig. 1 zeigt eine Querschnittsdarstellung durch eine Kupplungsanordnung gemäß einem Ausführungsbeispiel;

Fig. 2 zeigt eine perspektivische Darstellung des Förderbauteils der Kupplungsanordnung aus Fig. 1;

Fig. 3 zeigt eine Querschnittsdarstellung einer weiteren Kupplungsanordnung gemäß einem weiteren Ausführungsbeispiel;

Fig. 4 zeigt eine Querschnittsdarstellung einer weiteren Kupplungsanordnung gemäß einem Ausführungsbeispiel;

Fig. 5 zeigt eine Querschnittsdarstellung einer weiteren Kupplungsanordnung gemäß einem Ausführungsbeispiel;

Fig. 6 zeigt eine Querschnittsdarstellung einer weiteren Kupplungsanordnung gemäß einem Ausführungsbeispiel;

Fig. 7 zeigt eine eine Querschnittsdarstellung einer weiteren Kupplungsanordnung gemäß einem Ausführungsbeispiel;

Fig. 8 zeigt eine perspektivische Darstellung eines weiteren Bauteils und eines Förderbauteils der Kupplungsanordnung aus Fig. 7;

Fig. 9 zeigt eine perspektivische Darstellung einer weiteren Ausführungsform des weiteren Bauteils einer Kupplungsanordnung gemäß einem Ausführungsbeispiel;

Fig. 10 zeigt eine perspektivische Darstellung einer weiteren Ausführungsform des weiteren Bauteils einer Kupplungsanordnung gemäß einem Ausführungsbeispiel;

Fig. 11 zeigt eine perspektivische Darstellung einer weiteren Ausführungsform des weiteren Bauteils und eines Federelements einer Kupplungsanordnung gemäß einem Ausführungsbeispiel; und

Fig. 12 zeigt eine perspektivische Darstellung einer weiteren Ausführungsform des weiteren Bauteils und eines Federelements einer Kupplungsanordnung gemäß einem Ausführungsbeispiel.

Bei der nachfolgenden Beschreibung der beigefügten Figuren, die Ausführungsformen der vorliegenden Erfindung zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

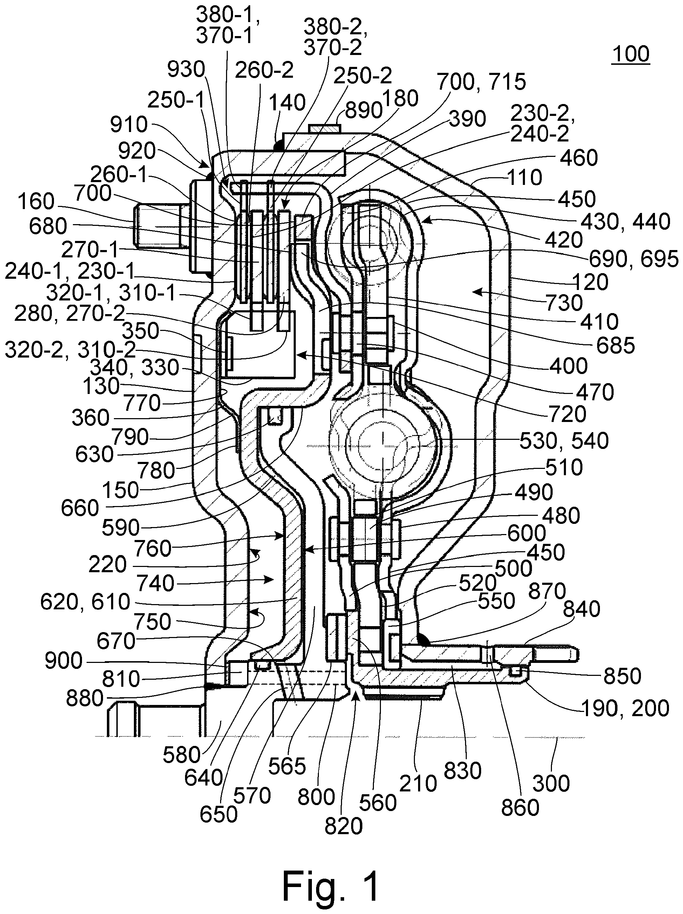

Fig. 1 zeigt eine Querschnittsdarstellung einer Kupplungsanordnung 100 gemäß einem Ausführungsbeispiel. Die Kupplungsanordnung 100 kann hierbei beispielsweise im Rahmen eines Antriebsstrangs eines Fahrzeugs zum Einsatz kommen, um beispielsweise ein von einem Antriebsaggregat bereitgestelltes Drehmoment an ein Getriebe oder ein anderes Bauteil trennbar weiterzugeben. Die Kupplungsanordnung 100 kann daher beispielsweise als Trennkupplung im Falle einer Kombination mit einem synchronisierten Getriebe oder auch als Anfahrkupplung im Zusammenspiel mit einem unsynchronisierten Getriebe, beispielsweise einem entsprechenden Automatikgetriebe, verwendet werden.

Die Kupplungsanordnung 100 umfasst so ein Gehäuse 110, welches im vorliegenden Fall als zweiteiliges Gehäuse mit einer ersten Gehäuseschale 120 und einer zweiten Gehäuseschale 130 ausgeführt ist, wobei die zweite Gehäuseschale 130 auch als motorseitiger Deckel der Kupplungsanordnung 100 bezeichnet wird. Die beiden Gehäuseschalen 120, 130 sind hierbei über eine Schweißverbindung 140 miteinander verbunden. Das Gehäuse 110 ist so mit einem flüssigen Medium befüllbar bzw. befüllt, bei dem es sich beispielsweise um ein Öl oder eine andere Flüssigkeit handelt, die geeignet ist, im Inneren des Gehäuses 110 entstehende Wärme aufzunehmen und abzutransportieren.

Die zweite Gehäuseschale 130 und damit das Gehäuse 110 dienen bei der in Fig. 1 gezeigten Kupplungsanordnung 100 als Antriebsbauteil 150. Zu diesem Zweck weist die zweite Gehäuseschale 130 eine Anschweißschraube 160 zum Befestigen an einer Flexplatte oder einem Schwungrad eines Antriebsaggregats, beispielsweise eines Motors, oder einer anderen Komponente des Antriebsstrangs auf. Alternativ kann anstelle der Anschweißschraube 160 auch ein Zapfen oder eine andere Befestigungsstruktur zum Befestigen der Kupplungsanordnung 100 implementiert werden.

Bei der in Fig. 1 gezeigten Kupplungsanordnung 100 handelt es sich genauer gesagt um eine Mehrscheiben- bzw. Mehrlamellenkupplung. Entsprechend weist die Kupplungsanordnung 100 in einem Innenraum des Gehäuses 110 ein Reibpaket 180 auf, das eine Mehrzahl von ersten Reibflächen 230 und zweiten Reibflächen 240 aufweist, wobei die ersten Reibflächen über nachfolgend beschriebene Komponenten wenigstens im Wesentlichen drehfest mit dem Antriebsbauteil 150 bzw. dem Gehäuse 110 und die zweiten Reibflächen 240 wenigstens im Wesentlichen drehfest mit einem Abtriebsbauteil 190 der Kupplungsanordnung gekoppelt sind. Bei dem Abtriebsbauteil 190 handelt es sich genauer gesagt um eine untere Nabe 200, die über eine Innenverzahnung 210 formschlüssig mit einer in Fig. 1 nicht gezeigten Getriebeeingangswelle koppelbar ist. Die Getriebeeingangswelle weist eine der Innenverzahnung 210 entsprechende Außenverzahnung auf.

Bei dem in Fig. 1 gezeigten Ausführungsbeispiel einer Kupplungsanordnung 100 umfasst das Reibpaket 180 eine an einer Innenfläche 220 des Gehäuses 110 bzw. der zweiten Gehäuseschale 130 gebildete erste Reibfläche 230-1, die mit einer entsprechenden zweiten Reibfläche 240-1 einer Außenlamelle 250-1 in Reibeingriff steht bzw. in einen solchen bringbar ist. Die Außenlamelle 250 ist hierbei mit einem Reibbelag 260-1 beschichtet, an der die zweite Reibfläche 240-1 gebildet ist. Im Unterschied hierzu ist die erste Reibfläche 230-1 direkt an der Innenfläche 220 des Gehäuses 110 gebildet, ist also beispielsweise als Stahloberfläche ausformt, wenn das Gehäuse 110 ebenfalls aus Stahl gefertigt ist.

Die Außenlamelle 250-1 weist an einer der Innenfläche 220 abgewandten Seite einen weiteren Reibbelag 260-2 auf, der an einer Oberfläche eine weitere zweite Reibfläche 240-2 ausbildet. Die zweite Reibfläche 240-2 steht mit einer Innenlamelle 270-1 in Reibeingriff bzw. kann mit dieser über eine entsprechende erste Reibfläche 230-2 in Reibeingriff gebracht werden.

Das Reibpaket 180 weist ferner eine weitere Außenlamelle 250-2 und eine weitere Innenlamelle 270-2 auf, wobei die Außenlamelle 250-2 ebenfalls entsprechende Reibbeläge 260 aufweist, die jedoch der Übersichtlichkeit halber in Fig. 1 ebenso wenig mit Bezugszeichen versehen sind, wie die sich entsprechend ergebenden ersten und zweiten Reibflächen 230, 240. Die Außenlamelle 250-2 ist hierbei zwischen den beiden Innenlamellen 270-1 und 270-2 angeordnet. Das Reibpaket 180 wird an einer der Innenfläche 220 des Gehäuses 110 abgewandten Seite somit durch die Innenlamelle 270-2 begrenzt.

Die Innenlamellen 270 und die Außenlamellen 250 sind hierbei als im Wesentlichen scheibenförmige Stahlbauteile implementiert und stellen entsprechende, wenigstens abschnittsweise scheibenförmige Bauteile dar, an denen im Bereich der scheibenförmigen Abschnitte die ersten bzw. zweiten Reibflächen 230, 240 angeordnet sind. Wie nachfolgend noch beschrieben wird, stellt die Innenlamelle 270-2 hierbei das Bauteil 280 dar, mit welchem ein Kolben 610, der als Anpresselement 620 dient und diesen umfasst, in Kontakt tritt, um den Reibeingriff zwischen den ersten und zweiten Reibflächen 230, 240 zu schaffen. Selbstverständlich können bei anderen Ausführungsbeispielen auch die Reibbeläge 260 an den jeweils anderen Bauteilen vorgesehen sein.

Sowohl die Innenlamellen 270 wie auch die Außenlamellen 250 weisen bezogen auf eine Drehachse 300 jeweils eine zentrale Ausnehmung auf, wobei sowohl die Innenlamellen 270 wie auch die Außenlamellen 250 gerade um die Drehachse 300 herum drehbar angeordnet sind. Die Drehachse 300 stellt daher auch im mathematischen Sinn die Drehachse der Kupplungsanordnung 100 dar und wird auch als axiale Richtung bezeichnet.

Um eine Drehmomentübertragung von dem als Antriebsbauteil 150 dienenden Gehäuse 110 an die Innenlamellen 270 zu ermöglichen, weisen diese jeweils einen Abschnitt 310-1, 310-2 auf, an denen an einer Seitenfläche jeweils eine Mitnehmerfläche 320-1, 320-2 ausgebildet ist, über die die Innenlamellen 270 jeweils mit einer Förderfläche 330 eines Förderbauteils 340 derart in Eingriff stehen, sodass bei einer Drehung des Förderbauteils 340 auch die jeweiligen Innenlamellen 270 in eine Drehung versetzt werden. Das Förderbauteil 340 ist hierbei im Wesentlichen ringförmig ausgestaltet und erstreckt sich um die Drehachse 300 herum entlang eines Umfangs der Kupplungsanordnung 100. Das Förderbauteil 340 ist bei dem in Fig. 1 gezeigten Ausführungsbeispiel im Wesentlichen mäanderförmig ausgestaltet, sodass die Förderflächen 330 im Wesentlichen senkrecht zu einer Umfangsrichtung der Kupplungsanordnung 100, also im Wesentlichen senkrecht zu einer tangentialen Richtung verlaufen, wobei die tangentiale Richtung senkrecht auf der Drehachse 300 und einer in der entsprechenden Querschnittsebene von der Drehachse 300 weg weisenden radialen Richtung steht.

Das Förderbauteil 340 weist hierbei genauer gesagt eine Mehrzahl der Förderflächen 330 auf. Diese sind entlang des Umfangs des Förderbauteils 340 beispielsweise regelmäßig angeordnet. Entsprechend weisen auch die Abschnitte 310 der Innenlamellen 270 eine entsprechende Anzahl von Mitnehmerflächen 320 auf, mit denen die Mehrzahl der Förderflächen 330 in Eingriff stehen. Das Förderbauteil 340 und die Abschnitte 310 der Innenlamellen 270 bilden so Verzahnungen, die ineinandergreifen. Hierdurch kann eine Verteilung des zu übertragenden Drehmoments auf eine größere Anzahl von Förderflächen 330 und Mitnehmerflächen 320 erzielt werden, sodass es gegebenenfalls möglich sein kann, ein entsprechend höheres Drehmoment auf die Innenlamellen 270 und damit durch die Kupplungsanordnung 100 gemäß einem Ausführungsbeispiel zu übertragen.

Das Förderbauteil 340 ist über eine Nietverbindung 350 mit einem Dichtelement 360 und der zweiten Gehäuseschale 130 drehfest und formschlüssig verbunden. Über die Nietverbindung 350 und gegebenenfalls das Dichtelement 360 wird so eine Drehbewegung des Antriebsbauteils 150, also des Gehäuses 110, auf das Förderbauteil 340 und damit auf die Förderflächen 330 übertragen. Durch den Eingriff der Innenlamellen 270 mit dem Förderbauteil 340 über die Förderflächen 330 und die Mitnehmerflächen 320 wird so das Drehmoment auf die Innenlamellen 270 übertragen.

Auch die Außenlamellen 250 weisen Abschnitte 370-1 und 370-2 auf, die über entsprechende weitere Mitnehmerflächen 380 mit einem Träger 390, der auch als Außenlamellenträger bezeichnet wird, in Eingriff stehen und im Falle eines geschaffenen Reibschlusses das von den Innenlamellen 270 auf die Außenlamellen 250 übertragene Drehmoment aufnehmen.

Der Träger 390 weist eine im Wesentlichen topfförmige Struktur mit einer zentralen Ausnehmung auf, der über eine Nietverbindung 400 mit einer ersten Nabenscheibe 410 eines zweistufigen Schwingungsdämpfers 420 gekoppelt ist. Die erste Nabenscheibe 410 ist hierbei über ein Abstands- oder Distanzstück 500 mit dem Träger 390 gekoppelt. Das Distanzstück 500 ist hierbei als Teil der Nietverbindung 400 gebildet, kann jedoch auch von dieser separat ausgeführt sein.

Der Schwingungsdämpfer 420 weist eine Mehrzahl von ersten Federelementen 430 auf, die entlang eines Umfangs der ersten Nabenscheibe 410 angeordnet und jeweils mit einem Ende mit dieser in Anlage stehen. Die ersten Federelemente 430 sind hierbei als Schraubenfedern 440 implementiert. Mit dem jeweils anderen Ende stehen die Schraubenfedern 440 bzw. die ersten Federelemente 430 mit einem ersten Abdeckblech 450 in Anlage, welches aufgrund der in Fig. 1 gezeigten Anordnung auch als rechtes Abdeckblech bezeichnet wird. Das erste Abdeckblech 450 ist hierbei über ein Abstands- bzw. Distanzstück 490 mit einem zweiten Abdeckblech 460 verbunden, welches auch als linkes Abdeckblech bezeichnet wird. Zusammen bilden diese ein nicht abgeschlossenes Gehäuse für das Dämpferelement 430. Das zweite Abdeckblech 460 führt hierbei einstückig nach radial innen.

Die Nietverbindung 400 und das Distanzstück 500, mit der der Träger 390 mit der ersten Nabenscheibe 410 des Schwingungsdämpfers 420 verbunden ist, ist hierbei durch ringsegmentförmiges Langloch 470 geführt, welches eine maximale Bewegungsamplitude der beiden Abdeckbleche 450, 460 zu der ersten Nabenscheibe 410 und damit dem Träger 390 begrenzt.

Das zweite Abdeckblech 460 erstreckt sich in radialer Richtung deutlich weiter als das erste Abdeckblech 450 in Richtung auf die Drehachse 300 zu. So ist das erste Abdeckblech 450 über eine weitere Nietverbindung 480 und das Distanzstück 490 mit dem zweiten Abdeckblech 460 mechanisch drehfest verbunden. Das Distanzstück 490 erstreckt sich hierbei durch ein ebenfalls ringsegmentförmiges Langloch 510 in einer zweiten Nabenscheibe 520. Die zweite Nabenscheibe 520 und das erste Abdeckblech 450 sind hierbei über zweite Federelemente 530 miteinander gekoppelt, die auch hier wiederum als Schraubenfedern 540 implementiert sind. Das zweite Abdeckblech 460 führt so einstückig radial innen über den zweiten Federsatz mit den zweiten Federelementen 530 hinaus.

Selbstverständlich können bei anderen Ausführungsbeispielen einer Kupplungsanordnung 100 auch andere Federelemente als erste bzw. zweite Federelemente 430, 530 zum Einsatz kommen. So können beispielsweise Tonnenfedern, aber auch auf Elastomeren basierende Federelemente verwendet werden, sofern die technischen Randbedingungen, also insbesondere die in dem Gehäuse 110 herrschenden chemischen und/oder thermischen Randbedingungen, einen entsprechenden Einsatz ermöglichen.

Die zweite Nabenscheibe 520 ist weiter über eine drehfeste Verbindung mit der unteren Nabe 200, also dem Abtriebsbauteil 190, verbunden. Auch hierbei kann beispielsweise eine Nietverbindung zum Einsatz kommen. Es kann jedoch auch eine andere, beispielsweise formschlüssige, kraftschlüssige und/oder stoffschlüssige Verbindungstechnik verwendet werden. So können beispielsweise die zweite Nabenscheibe 520 und die untere Nabe 200 miteinander verschweißt werden. Es können jedoch auch beispielsweise Steckverbindungen ergänzend oder alternativ implementiert werden. So können anstelle auch der anderen zuvor beschriebenen Nietverbindungen diese ergänzend oder alternativ als Steckverbindung oder mithilfe anderer Verbindungstechniken realisiert werden.

Das Drehmoment wird so von den Außenlamellen 250 über den Träger 390 und die erste Nabenscheibe 410 über die Federelemente 430 auf die Abdeckbleche 450, 460 übertragen, von wo es über die zweiten Federelemente 530 über die zweite Nabenscheibe 520, die untere Nabe 200 zu der in Fig. 1 nicht gezeigten Getriebeeingangswelle weitergeleitet wird, wenn die ersten und zweiten Reibflächen 230, 240 miteinander in Eingriff stehen.

Bei dem in Fig. 1 gezeigten Ausführungsbeispiel ist die zweite Nabenscheibe 520 gegenüber der ersten Gehäuseschale 120 mittels eines Lagers 550, genauer gesagt im vorliegenden Fall mittels eines axialen Gleitlagers, drehbar bezüglich der Drehachse 300 gelagert. An einer dem Lager 550 abgewandten Seite der zweiten Nabenscheibe 520 stützt sich diese gegen einen Abschnitt 560 der unteren Nabe 200 ab, der seinerseits über ein weiteres Lager 565 bezogen auf eine Trennwand 570 drehbar um die Drehachse 300 gelagert ist. Auch bei dem weiteren Lager 565 handelt es sich um ein axiales Gleitlager bei dem in Fig. 1 gezeigten Ausführungsbeispiel. Die Trennwand 570 ist Teil einer vorderen Nabe 580 und begrenzt zu wenigstens einer Seite einen Kolbendruckraum 590. Dieser wird entlang der axialen Richtung, also entlang der Drehrichtung 300 durch eine Kolbenfläche 600 eines Kolbens 610 begrenzt. Der Kolben 610 stellt, wie die weitere Beschreibung noch zeigen wird, das Anpresselement 620 dar, welches ausgebildet und angeordnet ist, um auf eine Betätigung hin die ersten und zweiten Reibflächen 230, 240 miteinander in den Reibeingriff zu bringen. Bei anderen Ausführungsbeispielen kann das Anpresselement 620 ebenso ausgebildet sein, den Reibeingriff zu trennen. Wie ebenfalls die nachfolgende Beschreibung noch näher illustrieren wird, handelt es sich jedoch bei der in Fig. 1 gezeigten Kupplungsanordnung um eine Normal-Offen-Kupplung, bei der in einem drucklosen Zustand, also ohne eine Betätigung, ein Reibeingriff nicht bzw. nur im geringfügigen Maße vorliegt. Das Anpresselement 620 ist also bei dem hier gezeigten Ausführungsbeispiel ausgebildet, um auf die Betätigung hin die ersten und zweiten Reibflächen 230, 240 miteinander in den Reibeingriff zu bringen.

Der Kolbendruckraum 590 ist mithilfe zweier Dichtelemente 630 und 640 gegenüber dem Anpresselement 620 einerseits und der vorderen Nabe 580 andererseits abgedichtet. Um in dem Kolbendruckraum ein entsprechendes, unter Druck stehendes Medium, bei dem es sich beispielsweise um das gleiche flüssige Medium handeln kann, mit dem auch der Rest des Gehäuses 110 befüllbar ist, weist die vordere Nabe 580 eine Zulaufbohrung 650 zu dem Kolbendruckraum 590 auf, die den Kolbendruckraum 590 fluidtechnisch mit einem der zweiten Gehäuseschale 130 zugewandten Bereich der zentralen Ausnehmung verbindet, in dem auch die Getriebeeingangswelle angeordnet ist.

Um eine Bewegung des Anpresselements 620 entlang der Drehrichtung 300 zu ermöglichen, sind die beiden Dichtelemente 630, 640 jeweils in einer entsprechenden Nut in der Trennwand 570 und der vorderen Nabe 580 angeordnet und derart ausgerichtet, dass diese mit einer entsprechenden, sich entlang der Drehrichtung 300 erstreckenden Dichtfläche 660 und 670 des Anpresselements 620 in Kontakt stehen.

Das Anpresselement 620 erstreckt sich entlang der radialen Richtung, also ausgehend von der Drehachse 300 senkrecht zu dieser bis in Höhe der Innen- und Außenlamellen 270, 250. Das Anpresselement 620 weist in diesem Bereich eine erste Anpressfläche 680 auf, die den ersten und zweiten Reibflächen 230, 240, also den Außenlamellen 250 und Innenlamellen 270, zugewandt ist. Die erste Anpressfläche 680 ist bei dem in Fig. 1 gezeigten Ausführungsbeispiel durch eine Einscherung des Anpresselements 620 gebildet, durch die sich eine Kolbenzunge 690 bildet, die gegenüber dem Anpresselement 620 in diesem Bereich auf die ersten und zweiten Reibflächen 230, 240 hin ausgestellt ist. Die Kolbenzunge 690, die auch als Nase bezeichnet wird, ist also über ein Materialstück, aus dem das Anpresselement 620 gefertigt ist, also beispielsweise aus einem Stahl oder einem anderen metallischen Werkstoff, mit diesem verbunden und weist daher eine gegenüber dem Anpresselement 620 geringere Federkonstante auf. Die Kolbenzunge 690 (Federstruktur 695) ist somit über einen Verbindungsabschnitt 685 mit dem Rest des Anpresselements 620 verbunden. Selbstverständlich können bei Ausführungsbeispielen nicht nur einzelne, sondern mehrere entsprechende Federstrukturen 695 bzw. Kolbenzunge 690 implementiert werden. So weist die Fig. 1 gezeigte Kupplungsanordnung 100 entsprechend eine Mehrzahl von Kolbenzungen 690 auf, die entlang des Umfangs der Kupplungsanordnung verteilt angeordnet sind. Die Anordnung kann hierbei sowohl regelmäßig, wie auch unregelmäßig erfolgen.

Die Kolbenzunge 690 stellt bei dem in Fig. 1 gezeigten Ausführungsbeispiel einer Kupplungsanordnung 100 somit eine Federstruktur 695 dar, die derart ausgebildet und angeordnet ist, um durch eine Formänderung auf das Bauteil 280 wenigstens teilweise die Kraft zu bewirken, über die das Anpresselement auf eine Betätigung hin den Reibeingriff schafft bzw. trennt. Bei der Federstruktur 695 handelt es sich um eine Biegefederstruktur, die im vorliegenden Fall blattfederartig ausgestaltet ist.

Die Kolbenzunge 690 steht hierbei über die erste Anpressfläche 680 mit einer Rückseite der Innenlamelle 270-2, also dem Bauteil 280, in Kontakt, sodass die Rückseite der Innenlamelle 270-2 ebenfalls eine Rückseite des Bauteils 280 bildet. Die Rückseite des Bauteils 280 liegt hierbei der ersten Reibfläche 230 der Innenlamelle 270-2 gegenüber bzw. ist auf der dieser abgewandten Seite angeordnet. Das Anpresselement 620 ist so mithilfe der Kolbenzunge 690 ausgebildet, um über die erste Anpressfläche 680 des Anpresselements 620 eine Anpresskraft oder Kraft in Richtung der ersten und zweiten Reibflächen 230, 240 zu schaffen, durch die der Reibeingriff zwischen diesen geschaffen werden kann. Aufgrund der gegenüber dem Rest des Anpresselements 620 reduzierten Federkonstante kann gegebenenfalls durch das Vorsehen der ersten Anpressfläche 680 an der Kolbenzunge 690 ein sanfteres Einkuppeln ermöglicht werden.

Das Anpresselement 620 weist darüber hinaus jedoch ferner eine zweite Anpressfläche 700 auf, die nicht an der Kolbenzunge 690, sondern vielmehr an einem Abschnitt 710 des Anpresselements 620 gebildet ist. Der Abschnitt 710 bildet so eine Anpressstruktur 715, über die die Formänderung der Kolbenzunge 690, im vorliegenden Ausführungsbeispiel dadurch begrenzt wird, dass die Anpressstruktur 715 über die zweite Anpressfläche 700 parallel zu der ersten Anpressfläche 680 mit dem Bauteil 280 in Kontakt steht, wenn die Kolbenzunge 690 einen solchen Grad der Formänderung, also eine solche Verbiegung erreicht hat, dass die zweite Anpressfläche 700 mit dem Bauteil 280 in Kontakt tritt. Eine Erhöhung der Anpresskraft wird so auf die erste und die zweite Anpressfläche 680, 700 verteilt. Bei diesem Ausführungsbeispiel wird also die Anpresskraft wenigstens teilweise stets von der Kolbenzunge 690 auf das Bauteil 280 übertragen.

Hinsichtlich seiner Federeigenschaften, also beispielsweise seiner Federkonstanten, unterscheidet sich der Abschnitt 710 deutlich weniger von den weiteren Bereichen des Anpresselements 620, als dies beispielsweise im Fall der Kolbenzunge 690 der Fall ist. So ist die Federkonstante des Abschnitts 710 typischerweise deutlich größer als die der Kolbenzunge 690, beträgt also beispielsweise wenigstens ein 2-Faches, wenigstens ein 5-Faches oder wenigstens ein 10-Faches derselben.

Darüber hinaus sollte an dieser Stelle erwähnt werden, dass sich die Kolbenzunge 690 nur über einen beschränkten Winkelbereich erstreckt. Der Abschnitt 710 und damit die zweite Anpressfläche 695 umfasst so Bereiche, die auf gleicher Höhe, wie die erste Anpressfläche 680 liegt.

Bei dem hier gezeigten Ausführungsbeispiel sind so die Kolbenzunge 690 und die Anpressstruktur 715 über den Verbindungsabschnitt 685 miteinander verbunden. Die Anpressstruktur 715 und die Kolbenzunge 690 sind einstückig, aus einem blechartigen Materialstück gefertigt.

Wird nun das Anpresselement 620 entlang der Drehachse 300 auf die ersten und zweiten Reibflächen 230, 240 zu bewegt, bewegt sich also in Fig. 1 nach links, erfolgt zunächst ein vergleichsweise sanftes Einkuppeln über die erste Anpressfläche 680 der Kolbenzunge 690. Wird das Anpresselement 620 weiter bewegt, erhöht sich die Formänderung (Deformation) der Kolbenzunge 690 und die Anpresskraft, die über die erste Anpressfläche 680 auf die Lamellen 250, 270 und damit auf die entsprechenden Reibflächen 230, 240 ausgeübt wird, wird größer. Wird das Anpresselement 620 nun so weit bewegt, dass dieser über die zweite Anpressfläche 700 des Abschnitts 710 die Anpresskraft bewirkt, also der zuvor erwähnte Grad der Formänderung der Kolbenzunge 690 erreicht, wird gegebenenfalls eine deutlich höhere, nahezu sprunghaft ansteigende Anpresskraft auf die Reibflächen 230, 240 übertragen. Abgesehen von elastischen Deformationen des Anpresselements 620 und gegebenenfalls der Reibbeläge 260 befindet sich das Anpresselement nunmehr an einem Endzustand, in dem die Kupplungsanordnung 100 hinsichtlich des Weges, den das Anpresselement 620 zurücklegt, vollständig eingekuppelt ist. Selbstverständlich ist es auch in diesem Bereich allerdings noch möglich, durch ein entsprechendes Erhöhen einer das Anpresselement 620 in Richtung der ersten und zweiten Reibflächen 230, 240 treibenden Kraft weiter zu erhöhen, allerdings ohne dass das Anpresselement 620 sich signifikant bewegt.

Bei dem zuvor beschriebenen Übergang von der ersten Anpressfläche 680 auf die zweite Anpressfläche 700 steht zwar auch die erste Anpressfläche 680 im Allgemeinen weiterhin in Kontakt mit der Innenlamelle 270-2, überträgt jedoch im Vergleich zu der zweiten Anpressfläche 700 deutlich geringere Kräfte, die sich aus dem Verhältnis der entsprechenden Federkonstanten der Kolbenzunge 690 und der des Abschnitts 710 ergeben. Das Anpresselement 620 liegt in diesem Zustand im Wesentlichen entlang seines ganzen Umfangs an der Innenlamelle 270-2 an.

Um bei einem Einkuppeln der Kupplungsanordnung 100 eine Veränderung eines effektiven Anpressradius bzw. des effektiven Reibradius zu unterbinden, zumindest jedoch zu begrenzen, können bei der in Fig. 1 gezeigten Ausgestaltung des Anpresselements 620 Flächenmittelpunkte bzw. effektive Berührpunkte der betreffenden beiden Anpressflächen 680, 700 unter Berücksichtigung des entsprechenden Gegenbauteils, also im vorliegenden Fall unter Berücksichtigung der Innenlamelle 270-2, im Wesentlichen zusammenfallen. Darüber hinaus kann bei der in Fig. 1 gezeigten Implementierung des Anpresselements 620 eine Anpressfläche erhöht werden. Hierdurch kann es eventuell möglich sein, eine höhere Anpresskraft aufgrund der höheren Fläche zu übertragen.

Der effektive Reibradius $r_m$, der häufig auch einfach nur Reibradius genannt wird, bzw. der effektive Anpresskraftradius $r_m$, der ebenso häufig nur als Anpresskraftradius bezeichnet wird, ist hierbei über eine Summation bzw. Integration von Radiuswerten r von Punkten an der ersten und zweiten Reibfläche 230, 240 gegeben, an denen eine Anpress- oder Reibungskraft $F(r,\varphi)$ vorliegt. Hierbei werden die lokal vorliegenden Kräfte $F(r,\varphi)$ als Gewichtungsfaktoren verwendet. Mit der Winkelkoordinate $\varphi$, die einen Winkel bezogen auf die Drehachse 300 darstellt, ergibt sich so der effektive Reib- oder Anpresskraftradius

$$r_m = \frac{\int_A r\, dF}{\int_A dF} = \frac{\iint_A r^2\, F(r,\varphi)\, dr\, d\varphi}{\iint_A F(r,\varphi)\, r\, dr\, d\varphi}\ .$$

Die Größe A bezeichnet hierbei eine Überlappfläche bzw. ihre Projektion entlang der Drehachse 300 der ersten und zweiten Reibfläche 230, 240, während dF eine Integration über die lokal vorliegenden Kräfte $F(r,\varphi)$ bedeutet. Auch wenn grundsätzlich sich der Reibradius und der Anpresskraftradius auf unterschiedliche Kräfte, nämlich einerseits auf tangential wirkende Kräfte zum Übertragen eines Drehmoments und andererseits auf axial wirkende Anpresskräfte bezieht, sind beide jedoch im Allgemeinen synonym verwendbar, da die maximal übertragbaren Tangentialkräfte aufgrund des vorherrschenden Reibschlusses proportional zu den Anpresskräften (Normalkräften) sind.

Eine Verlagerung des effektiven Anpresskraftradius könnte gegebenenfalls zu einer Veränderung der an den ersten und zweiten Reibflächen 230, 240 vorherrschenden Druckverhältnissen führen, die beispielsweise durch eine Elastizität der Reibbeläge 260 aber auch der betreffenden Innen- und Außenlamellen 270, 250 sowie anderer Bauteile hervorgerufen werden kann. Hierdurch kann gegebenenfalls ein Punkt an den Reibflächen 230, 240 verschoben werden, an dem eine maximale Wärme aufgrund der entstehenden Reibung bei dem Einkuppeln übertragen werden kann. So kann es unter gewissen Umständen gegebenenfalls dazu kommen, dass eine Kühlung der ersten und zweiten Reibflächen 230, 240 durch das zuvor erwähnte flüssige Medium im Inneren des Gehäuses 110 weniger effizient möglich ist. Auch kann es zu einer ungleichmäßigeren Abnutzung der Reibbeläge 260 kommen. Aufgrund der axialen Beweglichkeit der Innenlamellen 270 und der Außenlamellen 250 kann es ferner unter Umständen auch zu einer leichten Verkantung der Lamellen 250, 270 im Bereich ihrer jeweiligen Verzahnungen bzw. Eingriffe mit dem Förderbauteil 340 und dem Träger 390 kommen, wodurch der entsprechende Effekt gegebenenfalls weiter verstärkt werden kann.

Bei dem in Fig. 1 gezeigten Ausführungsbeispiel einer Kupplungsanordnung 100 kann, wenn die Anpressstruktur 715 die Formänderung der Kolbenzunge 690 (Federstruktur 695) begrenzt, also ein zwischen der Kolbenzunge 690 und dem Abschnitt 710 zuvor bestehender Spalt überbrückt ist, liegt somit das Anpresselement 620 im Wesentlichen mit seiner ganzen Fläche, also am ganzen Umfang am Reibradius $r_m$ an. Die Kupplungsanordnung 100 kann so gegebenenfalls eine Reibradiusverbesserung an den Reibbelägen 260 ermöglichen, indem in das Anpresselement 620 auch einfach nur als "Zungen" bezeichnete Kolbenzungen 690 mit einem definierten Abstand zu dem Abschnitt 710 integriert werden. Gegenüber einer Implementierung mit einem separaten Federelement kann so unter Umständen ein Bauteil eingespart werden.

Das Anpresselement 620 sowie die Außenlamellen 250, die Innenlamellen 270 und das Dichtelement 360 begrenzen hierbei wenigstens teilweise ein erstes Volumen 720 eines Innenvolumens der Kupplungsanordnung 100. Wie bereits zuvor im Zusammenhang mit dem Förderbauteil 340 kurz erläutert wurde, weist das Förderbauteil 340 die Mehrzahl von Förderflächen 330 auf, die nicht nur mit den Mitnehmerflächen 320 der Innenlamellen 270 in Eingriff steht, die Förderflächen 330 sind vielmehr ebenso ausgebildet, um bei einer Bewegung der Förderflächen gegenüber dem flüssigen Medium in dem Inneren des Gehäuses 110 einen Strom des flüssigen Mediums zu bewirken. Zu diesem Zweck ist das Förderbauteil 340 mit dem als Antriebsbauteil 150 dienenden Gehäuse 120 drehfest verbunden. Die Förderflächen 330 sind bei dem in Fig. 1 gezeigten Ausführungsbeispiel nicht zuletzt in dem ersten Volumen 720 angeordnet, sodass bei einer Bewegung der Förderflächen 330 zu dem flüssigen Medium das in diesem ersten Volumen 720 befindliche flüssige Medium gefördert wird.

Um eine möglichst effiziente Förderung des flüssigen Mediums zu ermöglichen, kann es in diesem Zusammenhang ratsam sein, die Innenlamellen 270 derart über die Mitnehmerflächen 320 mit den Förderflächen 330 des Förderbauteils 340 in Eingriff stehen zu lassen, dass eine Berührfläche zwischen den betreffenden Mitnehmerflächen 320 und der Förderfläche 330 höchstens 50 % einer Fläche der Förderfläche ist. Sofern eine ausreichende Stabilität und Kraftübertragung bzw. Drehmomentübertragung über die Förderflächen 330 auf die Mitnehmerflächen 320 gewährleistet ist, kann eine weitere Reduzierung gegenüber dem vorgenannten Verhältnis gegebenenfalls zu einer Verbesserung der Strömung führen. So kann es bei anderen Ausführungsbeispielen beispielsweise ratsam sein, das vorgenannte Verhältnis auf höchstens 30 %, höchstens 25 %, höchstens 20 %, höchstens 15 % oder höchstens 10 % zu beschränken. Eine untere Grenze für dieses Verhältnis ist in der Doppelfunktion aus Förderfläche einerseits und Eingriffsfläche andererseits zu suchen.

Die Förderflächen 330, wie sie in Fig. 1 gezeigt sind, sind hierbei zusammenhängend und eben. Sie sind entlang der Umfangs- oder Tangentialrichtung, also im Wesentlichen senkrecht zu der Drehachse 300 und von dieser wegweisenden radialen Richtung ausgerichtet. Im Hinblick auf die drehmomentübertragenden Eigenschaften der Förderflächen 330 kann diese Ausgestaltung vorteilhaft sein, da hierdurch axiale Kräfte entlang der Drehachse 300 über die Mitnehmerflächen 320 auf die Innenlamellen 270 reduziert, wenn nicht sogar vermieden werden können. Aber auch im Hinblick auf die Bewirkung des Stroms des fluiden Mediums, also beispielsweise eines Öls, kann diese Ausgestaltung der Förderflächen 330 von Vorteil sein. So kann hierdurch gegebenenfalls ein im Wesentlichen radial nach außen gerichteter Strom des flüssigen Mediums auf die ersten und zweiten Reibflächen 230, 240 hin bewirkt werden.

Die betreffenden Lamellen 270, 250 bzw. ihre gegebenenfalls implementierten Reibbeläge 260 können derart ausgebildet sein, dass diese von dem Strom des flüssigen Mediums durchströmbar sind. Zu diesem Zweck können die entsprechenden Lamellen 250, 270 bzw. die mit diesen verbundenen Komponenten Kanäle oder Fluidkanäle aufweisen, die einen Durchtritt des flüssigen Mediums entlang der radialen Richtung ermöglichen. Diese können beispielsweise in geraden Linien, jedoch auch in gebogenen Linien ausgeführt sein und im Bereich der Reibflächen 230, 240 verlaufen. Hierdurch kann eine gerade im Bereich der Reibflächen 230, 240 frei werdende Reibungsenergie bzw. Wärme räumlich nah an das flüssige Medium abgegeben und aufgrund des herrschenden Stroms abtransportiert werden.

Die Förderfläche 330 weist in der in Fig. 1 gezeigten Querschnittsebene eine Querschnittsfläche auf, die ihrerseits einen nicht unerheblichen Anteil an einer Querschnittsfläche des zweiten Volumens 720 in der betreffenden Querschnittsebene umfasst. Um eine möglichst hohe, den Umständen jedoch entsprechende Förderwirkung des Förderbauteils 340 zu ermöglichen, kann es ratsam sein, bei Ausführungsbeispielen einer Kupplungsanordnung 100 die Querschnittsfläche des ersten Volumens 720 im Vergleich zu der Querschnittsfläche der Förderfläche 330 derart zu wählen, dass diese höchstens ein 20-Faches, höchstens ein 15-Faches, höchstens ein 10-Faches oder höchstens ein 7,5-Faches der Querschnittsfläche der Förderfläche 330 entspricht. Es kann sogar möglich sein, bei Ausführungsbeispielen einer Kupplungsanordnung noch geringere Faktoren zu verwenden. So kann es durchaus möglich sein, auch höchstens ein 5-Faches, höchstens ein 3-Faches oder höchstens ein 2-Faches der Förderfläche 330 als Querschnittsfläche des ersten Volumens 720 vorzusehen. Selbstverständlich können bei anderen Ausführungsbeispielen jedoch auch größere Vielfache als die oben genannten auftreten.

Um einen entsprechenden Zufluss des flüssigen Mediums zu der Förderfläche 330 zu ermöglichen, weist das Anpresselement 620 in radialer Richtung auf Höhe der Förderflächen 330 oder näher zu der Drehachse 300 hin eine in Fig. 1 nicht gezeigte Durchlassöffnung 305 auf, die auch als Öffnungsbohrung oder Durchtrittsöffnung bezeichnet wird. Die Durchtrittsöffnung ist hierbei radial außerhalb des Dichtelements 360 angeordnet, mündet also in das erste Volumen 720 ein. Hierdurch kann flüssiges Medium durch die in Fig. 1 nicht gezeigte Durchtrittsöffnung in das erste Volumen 720 eintreten, wo dieses durch die sich relativ zu dem flüssigen Medium gegebenenfalls drehenden Förderflächen 330 radial nach außen durch die Reibflächen 230, 240 transportiert wird. Dort tritt der Strom des flüssigen Mediums in ein Teilvolumen 730 des Gehäuses 110 ein, in dem auch der Schwingungsdämpfer 420 angeordnet ist. In dem Teilvolumen 730 kann dann die an das flüssige Medium abgegebene Wärme an andere Bauteile, beispielsweise das Gehäuse 110, abgegeben werden. Ein Teil des flüssigen Mediums kann dann durch die in Fig. 1 nicht gezeigte Durchlassöffnung 305 wieder in das erste Volumen 720 eintreten, während ein weiterer Teil des flüssigen Mediums das Teilvolumen 730 durch das Lager 550 verlassen kann. Die Trennwand 570 trennt hierbei das Teilvolumen 730 von dem Kolbendruckraum 590.

Die Förderwirkung des Förderbauteils 340 basiert also nicht zuletzt darauf, dass bei einem Drehzahlunterschied zwischen dem Förderbauteil 340 und dem flüssigen Medium diesem ein Strom aufgezwungen wird. Das Förderbauteil kann sich so über die beschriebenen drehfesten Verbindungen eine Relativbewegung zwischen dem Antriebsbauteil 150 und dem Abtriebsbauteil 190 zunutze machen. Eine solche Relativbewegung liegt insbesondere im Bereich des Schlupfs vor, wenn also die ersten und zweiten Reibflächen 230, 240 miteinander in Kontakt stehen, jedoch unterschiedliche Drehgeschwindigkeiten aufweisen. Gerade in dieser Situation wird eine nicht unerhebliche Wärmemenge im Bereich der Reibflächen 230, 240 erzeugt, die über das flüssige Medium abtransportiert werden sollte. Liegt ein Drehzahlausgleich schließlich vor, ist also die Kupplungsanordnung 100 eingekuppelt, wird im Wesentlichen keine neue Wärme erzeugt, sodass auch ein Nachlassen der Förderwirkung aufgrund ähnlicher Geschwindigkeiten des Förderbauteils 340 einerseits und des flüssigen Mediums andererseits unproblematisch ist, wenn sich diese im Wesentlichen mit dem Gehäuse 110 mit dreht.

Das Dichtelement 360 trennt ein zweites Volumen 740 von dem ersten Volumen 720 ab. Das zweite Volumen 740 wird hierbei ferner durch einen Oberflächenabschnitt 750 der Innenfläche 220 der zweiten Gehäuseschale 130 und einer Kolbenrückseite 760 wenigstens teilweise begrenzt, wobei die Kolbenrückseite 760 an einer der Kolbenfläche 600 abgewandten Seite des Anpresselements 620 liegt.

Kommt es aufgrund einer Relativbewegung des Förderbauteils 340 mit seinen Förderflächen 330 zu dem flüssigen Medium zu einer Pumpwirkung, sinkt aufgrund hydrodynamischer Effekte ein Druck in dem ersten Volumen 720. Dadurch, dass das Dichtelement 360 jedoch das erste Volumen 720 von dem zweiten Volumen 740 trennt, kann so in dem zweiten Volumen 740 unabhängig von einer gegebenenfalls eintretenden Förderwirkung des Förderbauteils 340 der dort herrschende Druck im Wesentlichen konstant gehalten werden, zumindest jedoch ein gegebenenfalls aufgrund anderer Effekte auftretenden Druckabfall begrenzt werden. Hierdurch wird auch bei einer Relativbewegung bzw. Pumpwirkung durch das Förderbauteil 340 eine Kraft, die auf die Kolbenrückseite 760 einwirkt, im Wesentlichen nicht durch die Förderwirkung und damit durch die Bewegung des Förderbauteils 340 beeinflusst.

Anders ausgedrückt kann durch den Einsatz des Dichtelements 360 ein in dem zweiten Volumen 740 herrschender Druck konstanter gehalten werden, sodass bei einer Ansteuerung des Anpresselements 620 durch Einleiten oder Abziehen eines Flüssigkeitsvolumens in den oder aus dem Kolbendruckraum 590 auftretende Druckänderungen in dem zweiten Volumen und damit Kraftänderungen auf die Kolbenrückseite 760 im Wesentlichen unterbunden, zumindest jedoch reduziert werden können. Dadurch, dass die entsprechende Kraft auf die Kolbenrückseite 760 konstanter gehalten wird, kann ein Einkuppelverhalten, ein Auskuppelverhalten oder eine Definition eines bestimmten Schlupfverhältnisses an den Reibflächen 230, 240 durch Ansteuern des Anpresselements 620 gegebenenfalls verbessert werden. Es kann also gegebenenfalls möglich sein, eine Kontrollierbarkeit bzw. Steuerbarkeit der Kupplungsanordnung 100 gemäß einem Ausführungsbeispiel durch den Einsatz des entsprechenden Dichtelements 360 zu verbessern.

Je nach konkreter Ausgestaltung des Dichtelements 360 kann es möglich sein, das zweite Volumen 740 kleiner oder auch größer auszugestalten, indem eine radiale Position des Dichtelements 360 verändert wird. Hierbei kann jedoch weniger die tatsächliche Größe des ersten Volumens 720 im Vordergrund stehen, als vielmehr eine Lage und/oder eine Größe eines Flächenabschnitts des Anpresselements 620, der das zweite Volumen 740 wenigstens teilweise begrenzt. So treten bei einer Drehung der Kupplungsanordnung 100 Zentrifugalkräfte auf das in dem zweiten Volumen 740 und dem Kolbendruckraum 590 befindliche flüssige Medium auf. Diese führen zu einer Ausbildung eines Drucks, der von beiden Seiten her auf das Anpresselement 620 einwirkt und Kräfte bewirkt, die einander entgegengerichtet sind. Die radiale Position des Dichtungselements 360 bzw. seines Übergangsbereichs 790 hat daher darauf einen Einfluss, ob es aufgrund der Fliehkraftwirkung zu einer zusätzlichen effektiven Kraft auf das Anpresselement 620 durch die Druckveränderungen kommt, wie groß diese ist und in welche Richtung sie wirkt.

Wird beispielsweise der Übergangsbereich 790 des Dichtelements 360 näher auf die Drehachse 300 hin versetzt, sodass eine Erstreckung des Flächenabschnitts des Anpresselements 620 entlang der radialen Richtung verkleinert wird und das zweite Volumen 740 kleiner wird, werden auch die vonseiten des zweiten Volumens 740 auf das Anpresselement 620 einwirkenden Kräfte kleiner. Ein im Kolbendruckraum 590 aufgrund der Zentrifugalkraft wirkender Druck führt so zu einer gegenüber der unveränderten Position des Dichtelements 360 größeren effektiven Kraft auf das Anpresselement 620. Die auftretenden Zentrifugalkräfte im Kolbendruckraum 590 werden daher unterkompensiert.

Entsprechend kann durch eine Variation des Ortes, an dem der Übergangsabschnitt 790 angeordnet ist, jedoch auch eine Überkompensation oder eine im Wesentlichen vollständige Kompensation des wirkenden Fliehkraftdrucks auf das Anpresselement 620 ermöglicht werden. Hierbei kann es gegebenenfalls ratsam sein, den unter den betreffenden Umständen aufgrund der Zentrifugalkräfte in dem zweiten Volumen 740 auftretenden Druck derart zu bemessen, dass dieser weder zu groß, noch zu klein ist, um eine Einrück- oder Ausrückbewegung des Anpresselements 620 zu hemmen oder gar zu verhindern.

Wie bereits zuvor erwähnt wurde, ist das Dichtelement 360 ferner ausgebildet, um nicht nur das erste Volumen 720 von dem zweiten Volumen 740 fluidtechnisch zu trennen, es ist ferner ausgebildet, um auf das Anpresselement 620 oder ein anderes Bauteil mit einem wenigstens teilweise scheibenförmigen Abschnitt eine solche Kraft auszuüben, dass das Anpresselement 620 in seine Ausgangsposition zurückkehrt, wenn dieses nicht betätigt wird. Anders ausgedrückt ist das Dichtelement 360 hier derart ausgebildet, dass dieses auf das Anpresselement 620 eine solche Kraft ausübt, dass dieser in die in Fig. 1 gezeigte Ausgangsposition gebracht wird, in der gerade der Reibeingriff zwischen den ersten und zweiten Reibflächen 230, 240 gelöst, zumindest jedoch so weit geschwächt ist, dass kein nennenswertes Drehmoment über die Kupplungsanordnung 100 übertragen wird. Die Betätigung des Anpresselements 620 erfolgt hierbei durch Einleiten eines entsprechenden Fluidvolumens durch die Zulaufbohrung 650 zu dem Kolbendruckraum 590.

Um diese Doppelfunktionalität des Dichtelements 360 zu ermöglichen, weist das Dichtelement 360 eine erste Dichtfläche 770 und eine zweite Dichtfläche 780 auf, die durch einen Übergangsabschnitt 790 miteinander verbunden sind. Die erste Dichtfläche 770 und die zweite Dichtfläche 780 sind hierbei beide im Wesentlichen senkrecht zu der Drehachse 300 ausgerichtet und entlang dieser beabstandet. Die beiden Dichtflächen 770, 780 sind hierbei auch entlang der radialen Richtung, also senkrecht zu der Drehachse 300 voneinander beabstandet, wobei bei dem in Fig. 1 gezeigten Dichtelement 360 die zweite Dichtfläche 780 radial innen liegend zu der ersten Dichtfläche 770 angeordnet ist. Hierdurch weist der Übergangsabschnitt 790 eine Kegelmanteloberflächenform auf. Selbstverständlich können bei anderen Ausführungsbeispielen die beiden Dichtflächen 770, 780 entlang der radialen Richtung auch vertauscht angeordnet sein.

Die beiden Dichtflächen 770, 780 liegen hierbei auf entsprechenden Ebenen bzw. ringförmigen Abschnitten des Gehäuses 110 bzw. der zweiten Gehäuseschale 130 und dem Anpresselement 620 an. Diese können je nach konkreter Ausgestaltung gegebenenfalls oberflächenbehandelt, also beispielsweise abgedreht, sein, um entsprechende Gegendichtflächen zu bilden.

Kommt es nun aufgrund einer Bewegung des Anpresselements 620 zu einer Deformation des Dichtelements 360, wird nicht zuletzt der Übergangsabschnitt 790 deformiert, wobei aufgrund der flächigen Ausgestaltung der beiden Dichtflächen 770, 780 auch im Falle einer Deformation derselben oder einer Änderung ihrer geometrischen Ausrichtung zu dem Anpresselement 620 und der zweiten Gehäuseschale 130 tendenziell zunächst eine flächenförmige Auflage vorherrscht. Je nach Grad der Verformung des Dichtelements 620 kann es jedoch auch zu einem Abheben oder Abrollen wenigstens eines Teils einer der beiden Dichtflächen 770, 780 kommen. Es kann in einem solchen Fall zumindest abschnittsweise, gegebenenfalls jedoch auch vollständig dazu kommen, dass die betreffenden Dichtflächen 770, 780 das entsprechende Bauteil, also das Anpresselement 620 bzw. die zweite Gehäuseschale, nur linienförmig berühren. Es liegt jedoch typischerweise stets wenigstens ein linienförmiger Berührbereich vor. Hierdurch kann auch im Falle einer Bewegung des Anpresselements 620 eine Dichtwirkung des Dichtelements 360 wenigstens teilweise aufrechterhalten werden. Zur besseren Fixierung des Dichtelements 360 an der zweiten Gehäuseschale 130 weist dieses darüber hinaus an einer dem Übergangsabschnitt 790 abgewandten Seite einen Abschnitt auf, der einer Form der zweiten Gehäuseschale 130 angepasst ist, um so in radialer Richtung und in axialer Richtung, also entlang der Drehachse 300, wenigstens teilweise eine formschlüssige Verbindung zu bilden. Diese formschlüssige Verbindung kann gegebenenfalls auch nur als Montagehilfe bzw. Zentrierhilfe für das Dichtelement 360 ausgelegt sein. Ergänzend oder alternativ kann der Abschnitt, der auch als Kragen oder Rand bezeichnet wird, auch zur mechanischen Stabilisierung des Dichtelements 360 vorgesehen werden. So kann durch diesen gegebenenfalls eine Verformung des Dichtelements 360 in Umfangsrichtung bei einem Verfahren des Anpresselements 620 entlang der Drehachse 300 gegebenenfalls reduziert oder vollständig unterbunden werden. So können beispielsweise Wellenbildungen entlang der Umfangsrichtung bei entsprechenden Belastungen auftreten. Auch kann gegebenenfalls die zuvor beschriebene Anpassung der Formen des Dichtelements 360 und der zweiten Gehäuseschale 130 entfallen.

Das Dichtelement 360 dient somit bei dem in Fig. 1 gezeigten Ausführungsbeispiel einer Kupplungsanordnung 100 nicht nur zur fluidtechnischen Trennung des ersten und des zweiten Volumens 720, 740, sondern erfüllt die zusätzliche Funktion der Rückführung des Anpresselements 620 in eine Ausgangslage vor einer Betätigung desselben, sodass es sich bei der Kupplungsanordnung 100 gerade um eine Normal-Offen-Kupplungsanordnung handelt. Gegebenenfalls kann das Dichtelement 620 auch durch ein weiteres entsprechendes Federelement, beispielsweise in Form einer ergänzenden Teller-, Membran-, Blatt- oder Spiralfeder unterstützt werden.

Bei anderen Ausführungsbeispielen kann das Dichtelement 360 selbstverständlich auch eine derartige Kraft auf das Anpresselement 620 oder ein anderes Bauteil ausüben, sodass die Kupplungsanordnung 100 eine Normal-Geschlossen-Kupplungsanordnung darstellt, bei der ohne eine Betätigung ein Reibeingriff zwischen den ersten und zweiten Reibflächen 230, 240 besteht. Anders ausgedrückt kann das Dichtelement 360, das auch als Dichtblech bezeichnet wird, nicht nur wie in Fig. 1 gezeigt auf Druck vorgespannt, sondern auch auf Zug vorgespannt sein. Hierdurch kann beispielsweise eine Normal-Geschlossen-Kupplungsanordnung realisiert werden.

Bei der in Fig. 1 gezeigten Kupplungsanordnung 100 handelt es sich um einen Drei-Leitungs-Typ, bei dem die Zulaufbohrung 650 eine der drei Leitungen bzw. Kanäle darstellt, mit deren Hilfe der Kolbendruckraum 590 mit dem flüssigen Medium, gegebenenfalls auch mit einem anderen flüssigen Medium, beschickt werden kann. Um eine Bewegung des Anpresselements 620 zu ermöglichen, ist das zweite Volumen 740 über einen in Fig. 1 gestrichelt eingezeichneten Zuleitungskanal 800, der in eine Zuführung 810 zu dem zweiten Volumen 740 führt, fluidtechnisch verbunden. Der Zuleitungskanal 800 mündet hierbei in einen Zuflussbereich 820, der entlang der in Fig. 1 nicht gezeigten Getriebeeingangswelle geführt ist. Der Zuleitungskanal 800 und die Zuführung 810 ermöglichen so einen Zu- und Abfluss des flüssigen Mediums im Falle eines Bewegens des Anpresselements 620. Sie dienen somit dem Ausgleich des entsprechenden Volumens.

Der Zuflussbereich 820 ist hierbei über einige in der Innenverzahnung 210 bzw. der entsprechenden Außenverzahnung der Getriebeeingangswelle fehlender Zähne mit einem Zufluss für das flüssige Medium, also für das Öl bzw. Getriebeöl, verbunden. Häufig werden im Bereich der Innenverzahnung 210 und der korrespondierenden Außenverzahnung der in Fig. 1 nicht gezeigten Getriebeeingangswelle ein Zahn oder zwei oder mehr benachbarte Zähne an mehreren Stellen entlang des Umfangs der entsprechenden Verzahnungen eingespart, sodass Öldurchtrittsleitungen an diesen Stellen gebildet werden, die den Zuflussbereich mit dem Getriebe fluidtechnisch koppeln. Genauer gesagt fehlen bei dem in Fig. 1 gezeigten Ausführungsbeispiel an drei Stellen jeweils zwei benachbarte Zähne in den betreffenden Verzahnungen, um die Öldurchtrittsleitungen zu bilden.

Über den Zuflussbereich 820 wird nicht nur das zweite Volumen 740 mit dem flüssigen Medium versorgt, auch das Teilvolumen 730 ist über den Zuflussbereich 820 und in dem Lager 565 integrierten Ölführungsleitungen fluidtechnisch verbunden. Anders ausgedrückt führt der Ölzulauf durch die Innenverzahnung 210 und die entsprechende Außenverzahnung der Getriebeeingangswelle, den Zuflussbereich 820 und die Ölführungskanäle des Lagers 565. Die Zulaufbohrung 650 zu dem Kolbendruckraum 590 ist hierbei von dem Zuflussbereich 820 durch eine in Fig. 1 ebenfalls nicht gezeigte Dichtung getrennt. Der Zuflussbereich 820 stellt so die zweite Leitung dar.

Das flüssige Medium kann das Teilvolumen 730 über entsprechende Ölführungen bzw. Ölführungskanäle in dem Lager 550 und einem Abflussbereich 830 verlassen. Der Abflussbereich 830 ist hierbei zwischen der unteren Nabe 200 und einer Pumpennabe 840 gebildet und weist einen im Wesentlichen ringförmigen Querschnitt auf. Die Pumpennabe 840 ist hierbei gegenüber der unteren Nabe 200 mithilfe eines Dichtelements 850 abgedichtet. Das in dem Abflussbereich 830 eingetretene flüssige Medium kann dann über eine Öffnung 860, die auch als Ölablauf bezeichnet wird, abgezogen werden. Bei der in Fig. 1 gezeigten Kupplungsanordnung 100 ist die Öffnung 860 hierbei mit dem Sumpf des Getriebes oder aber auch einem anderen Behälter für das Öl bzw. das flüssige Medium verbunden. Die Öffnung 860 stellt somit zusammen mit dem Abflussbereich 830 die dritte Leitung dar.

Das Fördervolumen, welches durch das Förderbauteil 340 mit seinen Förderflächen 330 im Inneren des Gehäuses 110 umwälzbar ist, übersteigt in vielen Fällen ein Volumen, welches dem Gehäuse 110 über den Zuflussbereich 820 und den Abflussbereich 830 zugeführt bzw. über diesen abgeführt wird, um ein Vielfaches. So wird mithilfe der Förderflächen 330 des Förderbauteils 340, aber auch durch andere, eine Förderung des flüssigen Mediums unterstützende Strukturen im Inneren des Gehäuses 110 häufig ein Volumenstrom erzeugt. Dieser kann wenigstens ein 5-Faches, wenigstens ein 10-Faches, wenigstens ein 15-Faches oder wenigstens ein 20-Faches des durch den Zuflussbereich 820 der Kupplungsanordnung 100 zur Verfügung gestellten Volumens des flüssigen Mediums betragen, jedoch auch kleiner als die vorgenannten Werte sein. Die hierbei angegebenen Verhältnisse beziehen sich auf eine maximale Fördermenge durch das Förderbauteil 340. Die Förderflächen 330, die gerade eine Zwangsströmung in dem jeweiligen, mit Fluid befüllten und um die Drehachse rotierenden Gehäuse 110 erzeugen, nutzen gerade den Effekt unterschiedlicher Drehzahlen an der Antriebs- und Abtriebsseite der Kupplungsanordnung 100 aus, also die unterschiedlichen Drehzahlen an dem Antriebsbauteil 150 und dem Abtriebsbauteil 190. Die Förderflächen 330 wirken bezüglich der Umwälzung des flüssigen Mediums wie ein Pumpenrad bzw. wie ein Turbinenrad bei einer Hydrokupplung oder einem hydrodynamischen Drehmomentwandler.

Die Pumpennabe 840 ist mit der ersten Gehäuseschale 120 des Gehäuses 110 über eine Verschweißung 870 verbunden. Auch die zweite Gehäuseschale 130 ist mit der vorderen Nabe 580 über eine Verschweißung 880 verbunden, sodass sich im Zusammenhang mit der Schweißverbindung 140, die beispielsweise als Schweißnaht ausgeführt sein kann und die beiden Gehäuseschalen 120, 130 miteinander verbindet, ein abgeschlossenes Volumen mit dem Teilvolumen 730 sowie dem ersten und dem zweiten Volumen 720, 740 bildet.

Die entsprechenden Verschweißungen 870, 880 und 140 können hierbei sowohl als Schweißnähte wie auch als Schweißpunkte ausgeführt werden. Selbstverständlich können diese Verbindungstechniken auch gegebenenfalls durch andere, den Einsatzbedingungen angepasste und angemessene Verbindungstechniken ausgetauscht werden.

Fig. 1 zeigt darüber hinaus ein Wuchtgewicht 890, das im vorliegenden Fall mit der ersten Gehäuseschale 120 verschweißt ist. Dieses dient dem Ausgleich von Konstruktions-, Montage- oder anders bedingten Unwuchten und kann so entsprechende Unwuchten im Antriebsstrang des Fahrzeugs reduzieren. Die Position des Wuchtgewichts, wie es in Fig. 1 gezeigt ist, kann jedoch bei anderen Ausführungsbeispielen variieren.

Zwischen der Zuführung 810, die als Teil der vorderen Nabe 580 gebildet ist, und dem Gehäuse 110, genauer gesagt der zweiten Gehäuseschale 130, ist ferner eine Distanzscheibe 900 eingesetzt. Diese dient, wie im Nachfolgenden kurz erläutert wird, zur Einstellung eines Spiels zwischen den Lamellen, also der Einstellung des Spiels zwischen den ersten und zweiten Reibflächen 230, 240. So bestimmt das Spiel zwischen den Reibflächen 230, 240 einerseits die Fähigkeit der Kupplungsanordnung 100 den Momentenfluss zu unterbrechen sowie ein Ansprechverhalten beim Ein- oder Auskuppeln der Kupplungsanordnung 100.

Während im Interesse einer zuverlässigen Trennung der Reibflächen 230, 240 und damit im Interesse einer zuverlässigen Trennung des Drehmomentflusses tendenziell größerer Spiele S angezeigt sind, müssen diese jedoch von dem Anpresselement 620 im Falle des Einkuppelns bzw. des Auskuppelns überbrückt werden. Hierdurch kann es gerade bei einem kontrollierten Einrücken der Kupplungsanordnung 100 zu einem verzögerten Aufbau des Reibschlusses kommen, da zuvor das Spiel von dem Anpresselement 620 überbrückt werden muss. Eine Einstellung des Spiels der Lamellen kann daher gegebenenfalls ein Verhältnis zwischen einem Ansprechverhalten der Kupplung einerseits und einem Verschleiß der ersten und zweiten Reibflächen 230, 240 bzw. einer Trennfähigkeit der Kupplungsanordnung 100 verbessern.

Zu diesem Zweck weist die Kupplungsanordnung 100 gemäß einem Ausführungsbeispiel die zuvor beschriebene Distanzscheibe 900 auf. Die Distanzscheibe 900 kann hierbei - innerhalb entsprechender akzeptabler Toleranzbereiche - den jeweiligen Bauteildimensionen der Innenlamellen 270, der Außenlamellen 250, der Reibbeläge 260 und der weiteren gegebenenfalls vorhandenen Bauteile angepasst werden, die einen Einfluss auf das Lamellenspiel S haben. Hierbei kann das Lamellenspiel sowohl auf Basis zuvor vermessener Bauteildimensionen, als auch im Rahmen einer (Teil-) Montage der Kupplungsanordnung 100 und einer entsprechenden Bestimmung oder Messung des Lamellenspiels entlang der Drehachse 300 erfolgen.

Ist das Lamellenspiel S auf eine der beschriebenen Arten und Weisen bestimmt, kann dann eine entsprechende Distanzscheibe 900 beispielsweise aus einem Satz vorgefertigter Distanzscheiben eingesetzt werden. Diese kann selbstverständlich auch individuell eingeschliffen werden. Nach dem Einsetzen der entsprechenden Distanzscheibe 900 kann dann das Gehäuse 110 der Kupplungsanordnung 100 nach Fertigstellung der Montage beispielsweise mit den in Fig. 1 gezeigten Verschweißungen 870, 880, 140 verschlossen werden.

Die Distanzscheibe 900 kann darüber hinaus auch als zwei- oder mehrteilige Lösung implementiert werden. Bei der zwei- oder mehrteiligen Lösung der Distanzscheibe kann diese ein erstes Distanzscheibenbauteil und ein zweites Distanzscheibenbauteil umfassen, welche entlang ihres Umfangs wenigstens abschnittsweise ein keilförmiges Profil aufweisen. Hierdurch kann durch ein Verdrehen der beiden Distanzscheibenbauteile zueinander eine Dicke der Distanzscheibe entlang der Drehachse 300, also entlang der axialen Richtung durch ein Verdrehen der beiden Teile zueinander verändert werden. Die entsprechenden Profile können gegebenenfalls auch unmittelbar an den Komponenten implementiert werden, sodass eine Implementierung der Distanzscheibe 900 eventuell entfallen kann.

Durch das Einsetzen einer solchen zwei- oder mehrteiligen Distanzscheibe, also einer Distanzscheibe 900 mit einer Mehrzahl von Distanzscheibenbauteilen kann so durch ein Verdrehen der zweiten Gehäuseschale 130 gegenüber der vorderen Nabe 580 im Falle der Einbauposition der Distanzscheibe 900, wie sie in Fig. 1 gezeigt ist, das Lamellenspiel S zwischen den Reibflächen 230, 240 eingestellt werden.

Der zweite Gehäusedeckel 130 weist bei dem in Fig. 1 gezeigten Ausführungsbeispiel einer Kupplungsanordnung 100 einen ebenen Abschnitt 910 an einer Außenfläche des Gehäuses 110 auf, an die die Anschweißschraube zur Befestigung der Kupplungsanordnung 100 bzw. zur Befestigung des Gehäuses 110 an einer Flexplatte eines Motors oder eines anderen Antriebsaggregats befestigt ist. Die Anschweißschraube 160 ist zu diesem Zweck über eine Verschweißung 920 mit dem ebenen Abschnitt 910 des Gehäuses 110 verbunden. Das Gehäuse 110 bzw. die zweite Gehäuseschale 130 weist jedoch an der dem Innenvolumen zugewandten Innenfläche 220 in diesem Bereich eine Ausnehmung 930 auf, sodass die zweite Gehäuseschale 130 in diesem Bereich eine geringere Materialstärke als in anderen Bereichen aufweist. Hierdurch ist es möglich, den Träger 390 für die Außenlamellen 250 derart zu gestalten, dass dieser bis in die Ausnehmung 930 hineinragt. Dies ermöglicht es, auch die Außenlamelle 250-1 als ebene Scheibe auszuführen, ohne eine Berührung des Abschnitts 370-1 oder der weiteren Mitnehmerfläche 380-1 auch unter schwierigen Betriebsbedingungen mit dem Gehäuse 110 befürchten zu müssen. Hierdurch kann eine zu der Außenlamelle 250-2 identische Außenlamelle 250-1 eingesetzt werden, ohne dass besondere Vorkehrungen im Bereich des Abschnitts 370 oder anderer gestalterischer Merkmale derselben berücksichtigt werden müssen.

Eine solche Ausnehmung 930, die einem ebenen Abschnitt 910 an dem Gehäuse 110 gegenüberliegt, kann beispielsweise durch das Schaffen eines sogenannten S-Schlags im Bereich der zweiten Gehäuseschale 130 erfolgen. Der S-Schlag kann hierbei entlang des ganzen Umfangs vorgesehen werden, wohingegen die ebenen Abschnitte 910 sich entlang der Umfangsrichtung auf enge Raumbereiche beschränken können, in denen eine Verbindung mit der Anschweißschraube 160 erfolgen soll. Ist der S-Schlag in die zweite Gehäuseschale 130 eingebracht worden, kann dann durch ein Eindrücken derselben im Bereich der zu erzeugenden ebenen Abschnitte 910 dieser bereitgestellt werden. Das hierbei in das Innere des Gehäuses 110 eindringende Material, also das der Innenfläche 220 der zweiten Gehäuseschale 130 eindringende Material kann dann beispielsweise durch ein Abdrehen oder ein anderes spanendes Verfahren entfernt werden, um die Ausnehmung 930 zu schaffen.

Die im Zusammenhang mit Fig. 1 beschriebene Maßnahme der Schaffung des ebenen Abschnitts 910 zur Aufnahme der Anschweißschraube 160 oder eines anderen Zapfens zur Befestigung der Kupplungsanordnung an einem Antriebsaggregat oder einer anderen Einheit kann beispielsweise bei einer Kupplungsanordnung 100 sinnvoll oder notwendig sein, bei der eine besondere Lage des Antriebsstrangs bzw. seiner Komponenten notwendig ist. So handelt es sich bei der in Fig. 1 gezeigten Kupplungsanordnung 100 beispielsweise um eine solche, die für einen Quereinbau, also für eine Montage quer zur Fahrzeuglängsachse bestimmt ist. Ausführungsbeispiele einer solchen Kupplungsanordnung sind jedoch bei Weitem nicht auf solche Kupplungsanordnungen beschränkt. Sie können vielmehr auch für längs eingebaute Motoren und Getriebeeinheiten herangezogen werden.

Lediglich der Vollständigkeit halber soll an dieser Stelle noch erwähnt werden, dass das Anpresselement 620 nicht über eine formschlüssige Verbindung mit dem Gehäuse 110 gekoppelt ist. Werden also die durch die Kolbenzunge 690 und andere Komponenten hervorgerufene kraftschlüssige Verbindung bzw. reibschlüssige Verbindung überwunden, ist das Anpresselement 620 gegenüber dem Gehäuse 110 "frei" drehbar. Eine solche Situation kann beispielsweise bei einem abrupten Drehzahlwechsel ohne ein erneutes Einkuppeln der Kupplungsanordnung 100 erfolgen. Beispiele hierfür stellen ein Abbremsen des Fahrzeugs ausgehend von einer hohen Motordrehzahl zum Stillstand (Stillstand des Abtriebsbauteils 190) dar, um nur ein Beispiel zu nennen. Die freie Drehbarkeit des Anpresselements 620 kann in einer solchen Situation gegebenenfalls zu einer Geräuschentwicklung aus dem Bereich der Kupplungsanordnung 100 führen, was beispielsweise vom Fahrer als störend empfunden werden kann.

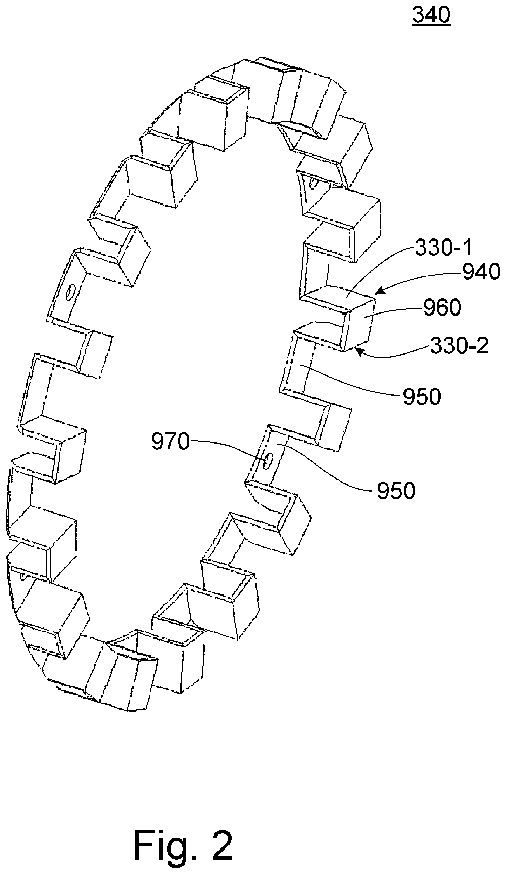

Fig. 2 zeigt eine dreidimensionale Darstellung des Förderbauteils 340, wie es im Rahmen der Kupplungsanordnung 100 in Fig. 1 zum Einsatz kommt. Das Förderbauteil 340, das auch als Lamellenmitnahme bezeichnet wird, ist hierbei im Wesentlichen als vollständiger Ring ausgeführt, also ringförmig ausgebildet, kann jedoch auch auf Basis von Förderbauteilsegmenten implementiert werden. Das Förderbauteil 340 weist hierbei eine Mehrzahl von regelmäßig entlang des Umfangs des Förderbauteils 340 angeordnete Zähne 940 auf, die sich über ringsegmentförmige Abschnitte 950 des Förderbauteils 340 erheben. Die Zähne 940 sind hierbei regelmäßig äquidistant angeordnet.

Jeder der Zähne, von denen in Fig. 2 lediglich einer mit einem Bezugszeichen bezeichnet ist, weist hierbei im Wesentlichen zwei senkrecht zu dem Abschnitt 950 verlaufende Zahnflanken auf, die die Förderflächen 330 bilden. Bei dem in Fig. 2 als Zahn 940 gekennzeichneten Zahn sind die beiden Förderflächen 330-1 und 330-2 durch eine Deckfläche 960 miteinander verbunden.

Wie im Zusammenhang mit Fig. 1 zuvor erläutert wurde, ist bei dem dort gezeigten Ausführungsbeispiel das Förderbauteil 340 mit dem Gehäuse 110, also dem Deckel der Kupplungsanordnung 100 über die Nietverbindung 350 verbunden. Zum Durchführen der Niete weist das Förderbauteil 340 an einigen der Abschnitte 950 entsprechende Öffnungen 970 auf, durch die die Nietverbindung mit dem Gehäuse 110 bzw. der zweiten Gehäuseschale 130 geschaffen wird. Genauer gesagt weist das in Fig. 2 gezeigte Förderbauteil hierbei insgesamt sechs Öffnungen 970 auf, die regelmäßig über den Umfang des Förderbauteils 340 verteilt sind. Selbstverständlich kann bei anderen Ausführungsbeispielen auch eine abweichende Anzahl von Öffnungen 970 implementiert sein, die regelmäßig oder auch unregelmäßig verteilt angeordnet sein können.

Das Förderbauteil 340 ist hierbei einstückig ausgebildet, ist also aus genau einem zusammenhängenden Materialstück gefertigt. Abgesehen von der Schaffung des Ausgangsmaterialstücks und der Öffnungen 970 ist hierbei das Förderbauteil 340 durch ein Umformen eines blechartigen Werkstücks hergestellt worden. Hierdurch kann eine vergleichsweise einfache und damit kostengünstige Herstellungsmethode verwendet werden. Bei anderen Ausführungsbeispielen, bei denen gegebenenfalls höhere Anforderungen an die Belastungen vorherrschen oder aber andere Randbedingungen ein anderes Herstellungsverfahren sinnvoller erscheinen lassen, können auch spanabhebende oder gusstechnische Herstellungsverfahren zur Schaffung des entsprechenden Förderbauteils 340 herangezogen werden.

Die Mitnahme der Lamellen 270, also auch des ersten Bauteils 280, wird hierbei in der in Fig. 1 gezeigten Mehr-Lamellen-Kupplungsanordnung mittels des mäanderförmigen Elements, nämlich dem Förderbauteil 340, realisiert. Das Förderbauteil 340 kann, wie in Fig. 2 gezeigt ist, als einteilige Lösung oder auch als mehrere Segmente implementiert sein. Die Förderflächen 330 erzeugen hierbei den internen Ölkreislauf, dienen jedoch gleichzeitig zur Lamellenmitnahme.

Wie in Fig. 1 gezeigt wurde, kann hierbei das Förderbauteil 340 motorseitig an dem Deckel des Gehäuses, also an der zweiten Gehäuseschale 130 mittels Nieten oder anderer Verbindungstechniken angebracht werden, um das Drehmoment des Motors auf die Lamellen 270 zu übertragen. Das in den Fig. 1 und 2 gezeigte Ausführungsbeispiel stellt so eine Kupplungsanordnung 100 dar, bei denen die Lamellenmitnahme deckelseitig angebracht ist. Hierbei können Kupplungsanordnungen 100 durchaus auch für hohe Drehmomente von mehreren Hundert Newtonmetern (Nm) zum Einsatz kommen. Jedoch können auch Kupplungsanordnungen 100 gemäß Ausführungsbeispielen implementiert werden, bei denen höhere, jedoch auch niedrigere maximale Drehmomente übertragbar sind.

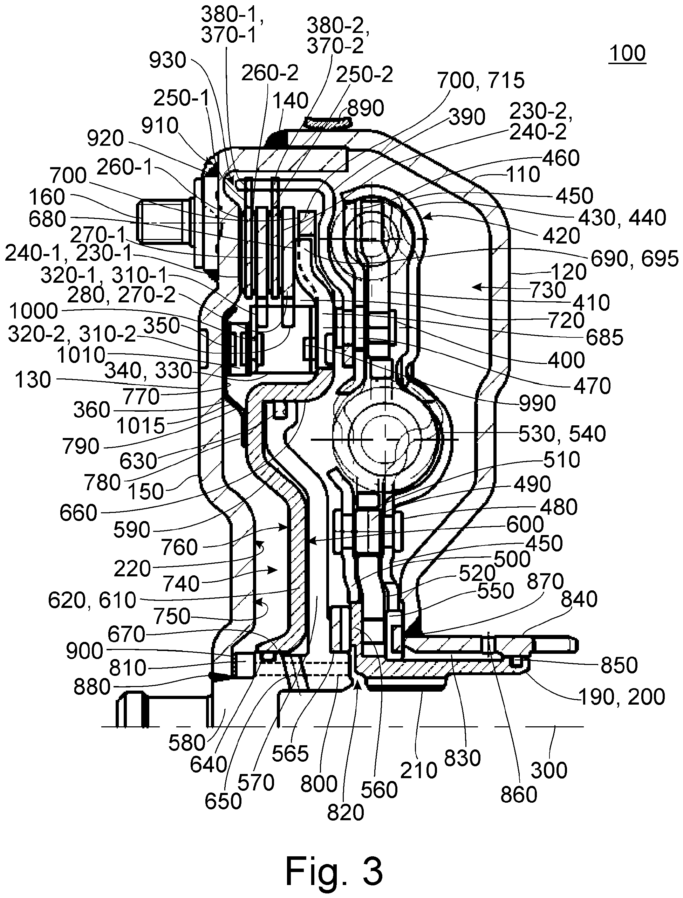

Fig. 3 zeigt ein entsprechendes Gesamtsystem einer Kupplungsanordnung 100 gemäß einem Ausführungsbeispiel, bei der das Förderbauteil 340 jedoch kolbenseitig befestigt ist.

So weist die Kupplungsanordnung 100 gemäß einem Ausführungsbeispiel, wie sie in Fig. 3 gezeigt ist, zwar auch weiterhin ein Dichtelement 360 auf, ist jedoch über seine Nietverbindung 350, welche das Dichtelement 360 mit der zweiten Gehäuseschale 130 (Deckel) verbindet, nicht mehr unmittelbar mit dem Förderbauteil 340 verbunden. Das Förderbauteil 340 ist vielmehr über eine Nietverbindung 990 mit dem Anpresselement 620 formschlüssig und damit drehfest verbunden. Das Förderbauteil 340 kann so beispielsweise über weitere Nietverbindungen 1000 mit einer Mehrzahl von Blattfederelementen 1010 formschlüssig verbunden, wobei die Blattfederelemente 1010 als Teil des Dichtelements 360 ausgeführt sind. Die Blattfederelemente 1010 sind hierbei durch eine Ausstellung des Materials des Dichtelements 360 ausgeformt und daher einstückig mit diesem gefertigt. Bei anderen Ausführungsbeispielen können jedoch die Blattfederelemente 1010 auch als separate Komponenten oder aber auch im Falle einer einstückigen Ausfertigung mit dem Dichtelement 360 mithilfe anderer Herstellungsverfahren gefertigt werden.

Da das Dichtelement 360 über die Nietverbindung 350 drehfest mit dem Deckel, also der zweiten Gehäuseschale 130, verbunden ist, ergibt sich so eine im Wesentlichen drehfeste Verbindung zwischen dem als Antriebsbauteil 150 dienenden Gehäuse 110 und dem Anpresselement 620. Das Dichtelement 360 stellt daher hier auch ein Verbindungsbauteil 1015 dar. Hierdurch ist das Anpresselement 620 im Vergleich zu der in Fig. 1 gezeigten Kupplungsanordnung 100 nun nicht mehr "frei" drehbar, sondern im Wesentlichen formschlüssig mit dem Gehäuse 110 verbunden. Auch bei einer abrupten Drehzahländerung ohne ein erneutes Einkuppeln der Kupplungsanordnung 100 kann daher eine entsprechende Geräuschentwicklung durch ein frei rotierendes Anpresselement 620 bei dieser Implementierung nicht auftreten.

Die Verbindung zwischen dem Anpresselement 620 und dem Gehäuse 110 kann hierbei nur im Wesentlichen drehfest sein, da beispielsweise aufgrund von Deformationen, thermischen Effekten oder aber aufgrund der durch die Blattfederelemente 1010 gegebenen geometrischen Verhältnisse bei einer axialen Verschiebung des Anpresselements 620 eine Verdrehung zwischen dem Anpresselement 620 und dem Gehäuse 110 auftreten kann. Unabhängig davon folgt bei dem hier gezeigten Ausführungsbeispiel das Anpresselement 620 jedoch der Drehbewegung des Gehäuses.

Bei der in Fig. 3 gezeigten Variante ist also das Förderbauteil 340 auf der Kolbenseite angebracht, wobei eine Verbindung zu der als Deckel dienenden zweiten Gehäuseschale 130 mittels der Blattfederelemente 1010 erfolgt, um das Drehmoment des Motors auf die Innenlamellen 270 über die Förderfläche 330 zu übertragen. Die Blattfedern oder Blattfederelemente 1010 schaffen so die Verbindung des Förderbauteils 340 zu der motorseitigen zweiten Gehäuseschale 130. Die Blattfederelemente 1010 stehen hierbei in das erste Volumen 720 hinein, sodass diese bei einer Drehung des Gehäuses 110 und damit einer Drehung des Förderbauteils 340 relativ zu dem flüssigen Medium im Inneren des Gehäuses 110 ebenfalls die Fluidförderung und damit die Schaffung des Stroms des Fluides unterstützen. Auch die Blattfederelemente 1010 sind so für die Ölförderung unterstützend.

Auch wenn zuvor im Wesentlichen von Nietverbindungen 990, 1000, 350 die Rede war, können jedoch auch andere Verbindungstechniken zur Schaffung der entsprechenden im Wesentlichen drehfesten Verbindung zwischen dem Gehäuse 110 und dem Förderbauteil 340 verwendet werden. So können die entsprechenden Nietverbindungen einzeln oder auch zusammen gegen eine andere Verbindungstechnik, beispielsweise eine Steckverbindung, jedoch auch gegen andere form-, kraft- und/oder stoffschlüssige Verbindungen getauscht oder durch solche ergänzt werden.

Auch kann bei einem entsprechenden Ausführungsbeispiel der Einsatz der Blattfederelemente 1010 gegen andere Bauteile ausgetauscht werden, sofern diese ebenfalls eine axiale Verlagerung des Anpresselements 620, also entlang der Drehachse 300, unterstützen oder zumindest jedoch nicht behindern.

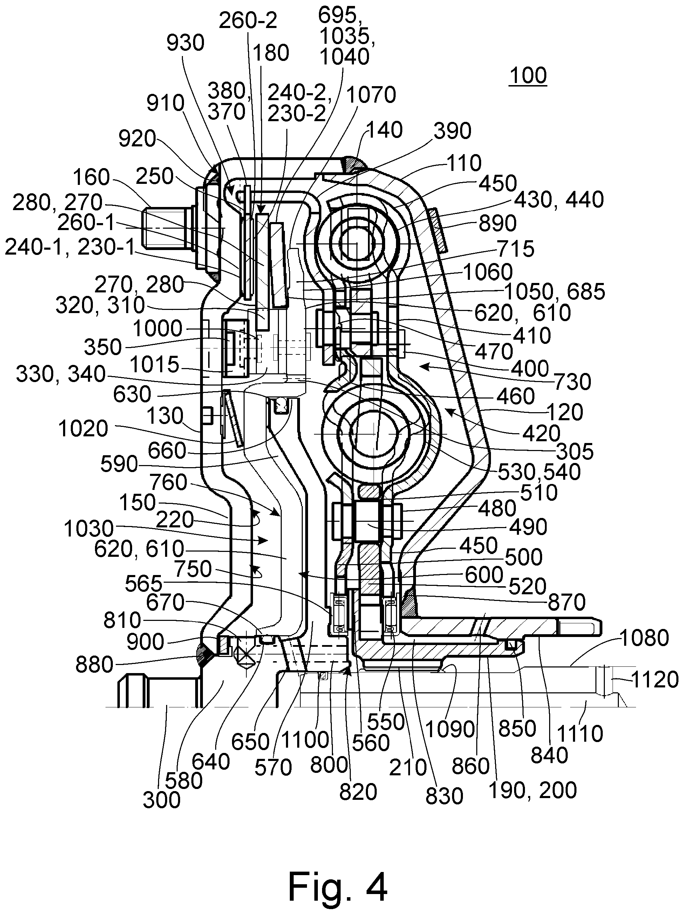

Fig. 4 zeigt ein weiteres Ausführungsbeispiel einer Kupplungsanordnung 100 gemäß einem Ausführungsbeispiel. Die Kupplungsanordnung 100 aus Fig. 4 unterscheidet sich von der in Fig. 3 gezeigten Kupplungsanordnung hinsichtlich einiger Komponenten, die im Nachfolgenden erläutert werden. Im Hinblick auf die weiteren Komponenten unterscheiden sich die beiden Kupplungsanordnungen 100 jedoch nur unwesentlich.

Zunächst ist festzuhalten, dass die Kupplungsanordnung 100, wie sie in Fig. 4 gezeigt ist, eine geringere Anzahl von Innen- und Außenlamellen 270, 250 aufweist. Genauer gesagt weist die Kupplungsanordnung 100 jeweils nur eine Außenlamelle 250 und eine Innenlamelle 270 auf. Die Innenlamelle 270, die das Bauteil 280 darstellt, steht hierbei wiederum über ihre Mitnehmerfläche 320 des Abschnitts 310 in Eingriff mit der Förderfläche 330 des Förderbauteils 340. Entsprechend ist das Förderbauteil 340 hinsichtlich seiner Ausdehnung entlang der Drehachse 300, also entlang der axialen Richtung, kürzer ausgeführt.

Darüber hinaus unterscheidet sich die Kupplungsanordnung 100 von der in Fig. 3 gezeigten Kupplungsanordnung ferner dadurch, dass die beiden Lager 565, 550, welche die axiale Führung des Abtriebsbauteils 190, also der unteren Nabe 200, ermöglichen, bei dieser Kupplungsanordnung 100 als axiale Nadellager ausgeführt sind. Selbstverständlich können bei anderen Ausführungsbeispielen auch andere axiale und/oder radiale Wälz- oder Gleitlager sowie Mischformen zum Einsatz kommen.

Die Kupplungsanordnung 100 aus Fig. 4 unterscheidet sich von der in Fig. 3 gezeigten ferner dadurch, dass nunmehr die zweite Gehäuseschale 130 im Bereich der Schweißverbindung 140 die erste Gehäuseschale 120 überlappt, also die Kupplungsanordnung 100 bzw. ihr Gehäuse 110 nach außen beschränkt. Entsprechend ist auch die Position des Wuchtgewichts 890 nicht mehr radial außen liegend angebracht, sondern an einer der Anschweißschraube 160 abgewandten Seite des Gehäuses 110 angeordnet.

Darüber hinaus unterscheidet sich die Kupplungsanordnung 100 aus Fig. 4 von der aus Fig. 3 dadurch, dass anstelle des Dichtelements 360 eine Tellerfeder 1020 zwischen der zweiten Gehäuseschale 130 und dem Anpresselement 620 angeordnet ist. Die Tellerfeder 1020 ist hierbei, wie auch das Dichtelement 360 aus Fig. 3, auf Druck vorgespannt, sodass es sich bei der Kupplungsanordnung 100 gemäß einem Ausführungsbeispiel erneut um eine Standard-Offen-Kupplungsanordnung handelt. Die Tellerfeder 1020 stellt im Unterschied zu dem Dichtelement 360 kein dichtendes Element dar, sodass die in Fig. 3 eingezeichneten ersten und zweiten Volumina 720, 740 hier ein gemeinsames Volumen 1030 bilden. Selbstverständlich können bei anderen Ausführungsbeispielen auch andere Federelemente als die Tellerfeder 1020 zum Einsatz kommen. So kann diese beispielsweise gegen eine Membranfeder, eine Anordnung von Schraubenfedern oder ein anderes Federelement ausgetauscht werden. Darüber hinaus kann bei anderen Ausführungsbeispielen selbstverständlich die Tellerfeder 1020 bzw. das gegen die Tellerfeder 1020 ausgetauschte Federelement auch auf Zug vorgespannt sein. Dementsprechend kann es sich auch bei dieser Kupplungsanordnung 100 gemäß einem Ausführungsbeispiel um eine Standard-Geschlossen-Kupplungsanordnung handeln.

Zur Schaffung der im Wesentlichen drehfesten Verbindung zu dem Förderbauteil 340 dient bei diesem Ausführungsbeispiel ein Verbindungsbauteil 1015, das über die Nietverbindung 350 mit dem Deckel, also der zweiten Gehäuseschale 130 mechanisch drehfest verbunden ist. Es können jedoch bei anderen Ausführungsbeispielen auch andere Verbindungstechniken an dieser Stelle eingesetzt werden.

Das Verbindungsbauteil 1015 weist eine Mehrzahl von Blattfedern 1010 auf, die in der bereits im Zusammenhang mit Fig. 3 beschriebenen Art und Weise die im Wesentlichen drehfeste Verbindung zu dem Förderbauteil 340 schaffen. Zu diesem Zweck ist das Verbindungsbauteil 1015 bzw. seine Blattfedern 1010 über die weiteren Nietverbindungen 1000 mit dem Förderbauteil 340 mechanisch drehfest verbunden. Auch hier können aber andere Verbindungstechniken eingesetzt werden.

Aber auch das Anpresselement 620 ist bei der in Fig. 4 gezeigten Kupplungsanordnung 100 unterschiedlich ausgestaltet. So weist das Anpresselement 620 zwar wiederum einen Kolben 610 auf, umfasst jedoch zusätzlich ein separates Federelement 1035 als Federstruktur 695, wobei das Federelement 1035 im vorliegenden Fall als eine Anlege-Tellerfeder 1040 implementiert ist. Das Federelement 1035 ist hierbei derart angeordnet und ausgebildet, dass diese die zum Schaffen des Reibeingriffs notwendige Kraft (Anpresskraft) wenigstens teilweise auf das Bauteil 280, genauer gesagt auf die der ersten Reibfläche 230 abgewandten Seite (Rückseite) des Bauteils 280 überträgt. Das Bauteil 280 ist hier die Innenlamelle 270.

Die Anlege-Tellerfeder 1040 ist hierbei als im Wesentlichen ringförmige Struktur ausgestaltet. Sie steht an einem dem äußeren radialen Ende der Anlege-Tellerfeder 1040 näheren Bereich mit der Innenlamelle 270, also dem Bauteil 280, in Kontakt, während sie sich an einer Schulter 1050 des Kolbens 610 an einem radial innen gelegenen Bereich der Anlege-Tellerfeder 1040 abstützt. Der Verbindungsabschnitt 685 zwischen der Federstruktur 695 und der Anpressstruktur 715 umfasst hier die Schulter 1050, wobei hier die Federstruktur 695 als separates Federelement 1035 formschlüssig mit dem Kolben 610 über den Verbindungsabschnitt 685 verbunden ist. Hierdurch ergeben sich ein erster und ein zweiter, in Fig. 4 nicht eingezeichneter Abstand bzw. Spalt S1 und S2. Der erste Abstand S1 erstreckt sich hierbei in einem im Wesentlichen entspannten Zustand der Federstruktur 695, bei dem die Federstruktur 695 das Bauteil 280 und den Verbindungsabschnitt 685 berührt, also mit Letzterem formschlüssig verbunden ist, auf Höhe der Verbindungsstruktur 685 zwischen der Federstruktur 695 (Federelement 1035) und dem Bauteil 280. Der erste Abstand S1 liegt somit zwischen der Anlege-Tellerfeder 1040 im Bereich der Schulter 1050, also an einem radial innen liegenden Bereich bzw. auf Höhe der Verbindungsstruktur 685, im Vergleich zu der Innenlamelle 270.

Die Schulter 1050 des Kolbens 610 erstreckt sich hierbei nur über einen kleinen radialen Bereich, an dem sich radial nach außen eine Kragenstruktur 1060 mit einem Vorsprung 1070 anschließt. Der Vorsprung 1070 stellt hierbei häufig den der Anlege-Tellerfeder 1040 nächsten Punkt der Kragenstruktur 1060 dar. In der Ruheposition des Anpresselements 620, also in dem im Wesentlichen entspannten Zustand der Federstruktur 695, weist der Vorsprung 1070 hierbei von der Anlege-Tellerfeder 1040 den kleinsten zweiten Abstand oder Spalt S2 entlang der axialen Richtung, also entlang der Drehachse 300, auf, der den Spalt S1 nicht übersteigt. Darüber hinaus weit der Vorsprung 1070 einen Abstand von der Drehachse 300 senkrecht zu dieser auf, der größer als die Ausdehnung der Schulter 1050 entlang der radialen Richtung ist, jedoch einen Außendurchmesser der Anlege-Tellerfeder 1040 nicht übersteigt.

Anders ausgedrückt liegt, da der Spalt S2 den Spalt S1 nicht übersteigt, gegebenenfalls sogar kleiner als dieser ist, der Kolben 610 über den Vorsprung 1070 im Wesentlichen auf Höhe des Reibradius an der Anlege-Tellerfeder 1040 an. Durch eine entsprechende Kragenradiusgröße kann so der Ort des Andrückens definiert bzw. festgelegt werden. Genauer gesagt bildet der Vorsprung 1070 aufgrund der im Wesentlichen rotationsförmigen Ausgestaltung des Kolbens 610 und einer spitz auslaufenden Form entlang der axialen Richtung eine Anpresslinie bzw. einen linienförmigen Kontakt mit der Federstruktur 695.

Da der Spalt S2 kleiner als der Spalt S1 ist, bewirkt dieser, dass der Kolben 610 an dem Reibradius oder im Bereich des Reibradius an der Anlege-Tellerfeder 1040 anliegt. Durch eine entsprechende Dimensionierung der Kragenradiusgröße kann so der Ort des Andrückens der Anpressstruktur 715 an der Federstruktur 695 genau festgelegt werden. Hierdurch kann gegebenenfalls auch der Ort des Anpressens der ersten und zweiten Reibflächen 230, 240 bestimmt werden. So kann auch bei diesem Ausführungsbeispiel eine Reibradiusbegrenzung an einer Belaganfederung realisierbar sein, die durch die spezielle Kolbenform augenfällig ist. Bei den im Zusammenhang mit den Fig. 1 und Fig. 3 beschriebenen Ausführungsbeispielen diente hierzu die Kolbenform mit den Kolbenzungen 690.

Bei dem hier gezeigten Ausführungsbeispiel wird so die zur Schaffung des Reibschlusses notwendige Kraft (Anpresskraft) im Wesentlichen vollständig von der Federstruktur 695 auf das Bauteil 280 dadurch übertragen, dass die Anpressstruktur 715 des Kolbens 610 mit dem Federelement 1035 an einer dem Bauteil 280 abgewandten Seite direkt und unmittelbar in Kontakt tritt.

Wird nun also das Anpresselement 620 betätigt, sodass der Kolben 610 sich in Richtung auf die Reibflächen 230, 240 zubewegt, erzeugt oder verstärkt die Anlege-Tellerfeder 1040 die auf die Innenlamelle 270 ausgeübte Kraft. Hierbei kommt es aufgrund der Struktur der Anlege-Tellerfeder 1040 zu einer Deformation derselben, sodass die Anlege-Tellerfeder 1040 leicht deformiert wird und an der Innenlamelle 270 "abrollt". Hierdurch kann es gegebenenfalls zu einer leichten Verschiebung des Abstands der maximalen Krafteinwirkung auf die Innenlamelle 270 kommen. Aufgrund der Ausgestaltung des Reibpakets 180 entspricht hierbei gerade der Punkt der maximalen Anpresskraft in etwa einem Radius, an dem die größten Anpresskräfte im Bereich der Reibbeläge 260 auftreten. Dieser Radius stellt so wiederum den Reibradius dar.

Wird nun der Kolben 610 weiter bewegt, sodass der Vorsprung 1070 mit der Anlege-Tellerfeder 1040 in Kontakt kommt, wenn also der Spalt S2 überbrückt ist, definiert nunmehr der radiale Abstand des Vorsprungs 1070 von der Drehachse 300 die Lage des Reibradius. Hierdurch kann dieser gezielter definiert werden, was gegebenenfalls zu einem geringeren Verschleiß, einer ungleichmäßigen Abnutzung und/oder einer besseren Wärmeabfuhr durch das die Reibflächen 230, 240 durchströmende flüssige Medium führt. Hierbei steigt die Zahl der zusätzlichen Bauteile gegenüber der in den Fig. 1 und Fig. 3 gezeigten Ausgestaltung des Anpresselements 620 nur geringfügig an, da nunmehr zusätzlich die Anlege-Tellerfeder 1040 implementiert wird.

Selbstverständlich können bei anderen Ausführungsbeispielen auch abweichende Geometrien der Kragenstruktur mit dem Vorsprung 1070 implementiert werden. So kann beispielsweise anstelle eines Vorsprungs 1070 mit einem linienförmigen Kontaktbereich zu der Federstruktur 695 auch ein Vorsprung 1070 mit einem flächenartigen Kontaktbereich vorgesehen werden. Ebenso kann anstelle der Anlege-Tellerfeder 1040 auch eine Membranfeder als Federelement 1035 eingesetzt werden.

Fig. 4 zeigt darüber hinaus schematisch die bereits zuvor erwähnte Getriebeeingangswelle 1080 mit ihrer in die Innenverzahnung 210 eingreifenden Außenverzahnung 1090, die die drehfeste Verbindung zu der unteren Nabe 200, also dem Abtriebsbauteil 190, ermöglicht. Wie bereits zuvor erwähnt wurde, weist die Außenverzahnung 1090 einige fehlende Zähne auf, um einen Durchfluss des flüssigen Mediums zu dem Zuflussbereich 820 zu ermöglichen.

Darüber hinaus zeigt Fig. 4 eine Nut mit einem Dichtelement 1100, die sich in Umfangsrichtung um die Getriebeeingangswelle 1080 zwischen dem Zuflussbereich 820 und der Zulaufbohrung 650 des Kolbendruckraums 590 erstreckt. Diese steht in Kontakt mit der vorderen Nabe 580 und dichtet den Zuflussbereich 820 von der Zulaufbohrung 650 ab. Um die Zulaufbohrung 650 und damit den Kolbendruckraum 590 mit dem flüssigen Medium versorgen zu können, weist die Getriebeeingangswelle 1080 ferner einen Zulaufkanal 1110 auf, der symmetrisch und entlang der Drehachse 300 ausgerichtet ist. Über eine Anschlussbohrung 1120 kann der Zulaufkanal 1110 mit dem flüssigen Medium zum Befüllen des Kolbendruckraums 590 versorgt werden.

Bei dem in Fig. 4 gezeigten Ausführungsbeispiel einer Kupplungsanordnung 100 wird so eine separate Anlege-Tellerfeder 1040 als Federelement 1035 bzw. Federstruktur 695 sowie eine spezielle Kolbenkragenform als Anpressstruktur 695 mit einem definierten Abstand S2 zur Anlege-Tellerfeder 1040 verwendet, welcher im Allgemeinen kleiner als der erste Abstand S1 zwischen der Stahllamelle (Bauteil 280) und der Anlege-Tellerfeder 1040 im Bereich der Schulter 1050 ist, um die Reibradiusverbesserung an den Reibbelägen 260 zu realisieren.

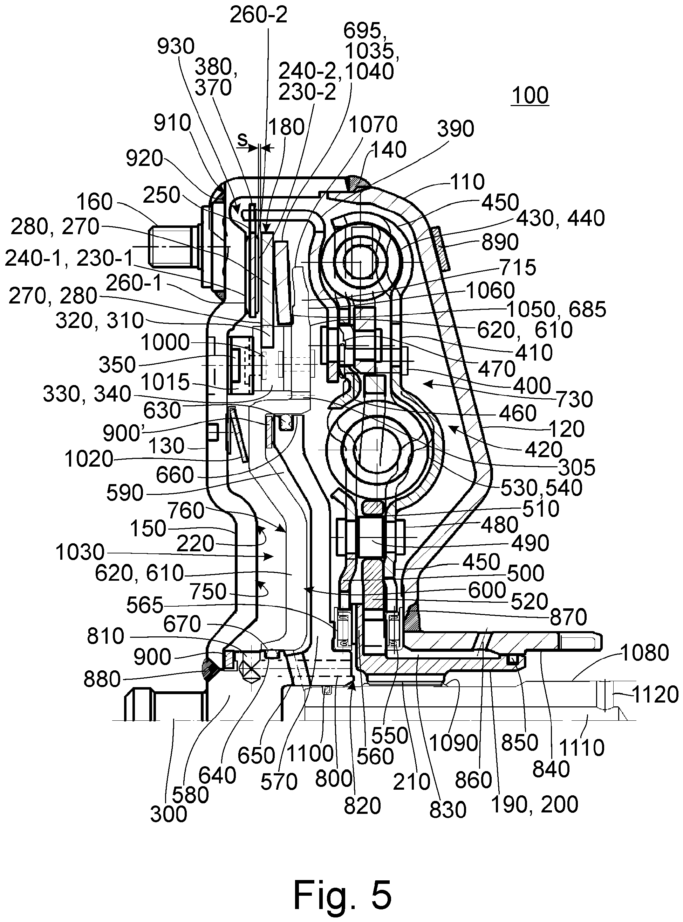

Fig. 5 zeigt ein weiteres Ausführungsbeispiel einer Kupplungsanordnung 100 gemäß einem Ausführungsbeispiel, bei der neben der bereits zuvor gezeigten Distanzscheibe 900 eine weitere Distanzscheibe 900' integriert ist. Die weitere Distanzscheibe 900' kann hierbei ebenso als einteilige oder als mehrteilige Distanzscheibe implementiert werden, wie dies bereits zuvor beschrieben wurde. Die Distanzscheibe 900' ist hierbei zwischen der Trennwand 570 und dem Kolben 610 bzw. dem Anpresselement 620 im Bereich des Kolbendruckraums 590 angeordnet. Hierdurch kann das Lamellenspiel S auch durch eine Variation der Position des Kolbens 610 variiert werden. Zusammen mit der Distanzscheibe 900 kann so das Lamellenspiel S durch Variation des Abstands der zweiten Gehäuseschale 130 oder aber auch durch Variation des Abstands des Kolbens 610 variiert werden.

Selbstverständlich ist es bei Weitem nicht notwendig, beide Distanzscheiben 900, 900' gleichzeitig zu implementieren. Eine entsprechende Einstellung des Lamellenspiels S kann bereits bei der Implementierung einer einzigen der beiden Distanzscheiben 900 realisiert werden, ohne dass hierdurch der für die Kupplungsanordnung 100 notwendige Bauraum ansteigt. Sowohl der Einsatz einer einzigen Distanzscheibe 900 oder 900', wie auch der Einsatz beider Distanzscheiben 900, 900' ermöglicht es vielmehr, das Lamellenspiel S einzustellen und dabei gleichzeitig den notwendigen axialen Bauraum der Kupplungsanordnung 100 gegenüber konventionellen Lösungen zu verringern.

Darüber hinaus unterscheidet sich das in Fig. 5 gezeigte Ausführungsbeispiel einer Kupplungsanordnung 100 nicht von dem in Fig. 4 gezeigten, weshalb an dieser Stelle auf die Beschreibung der Fig. 4 verwiesen wird.

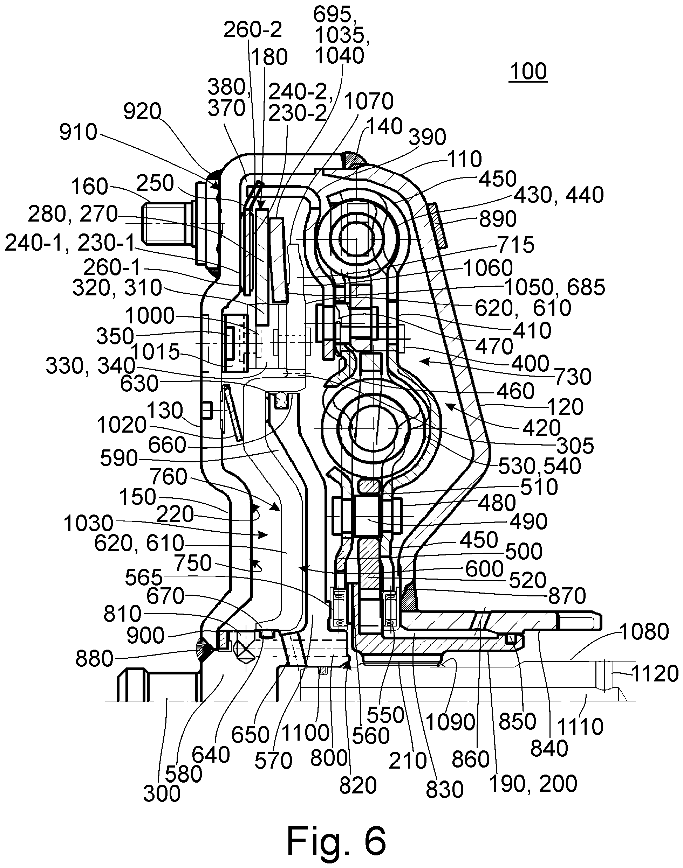

Fig. 6 zeigt schließlich eine weitere Variation der in Fig. 4 gezeigten Kupplungsanordnung 100, die sich im Wesentlichen von dieser Kupplungsanordnung 100 dadurch unterscheidet, dass die Ausnehmung 930 nicht implementiert ist. Als Folge ist der Träger 390 in axialer Richtung kürzer ausgestaltet, sodass der Abschnitt 370 mit der weiteren Mitnehmerfläche 380 der Außenlamelle 250 gekröpft ausgeführt ist, also gegenüber der Drehachse 300 um einen vorbestimmten Winkel von der zweiten Gehäuseschale 130 weg geknickt ist.

Abgesehen von dieser Variation unterscheidet sich die Kupplungsanordnung 100 aus Fig. 6 jedoch ebenfalls nicht von der in Fig. 4 gezeigten Kupplungsanordnung 100.

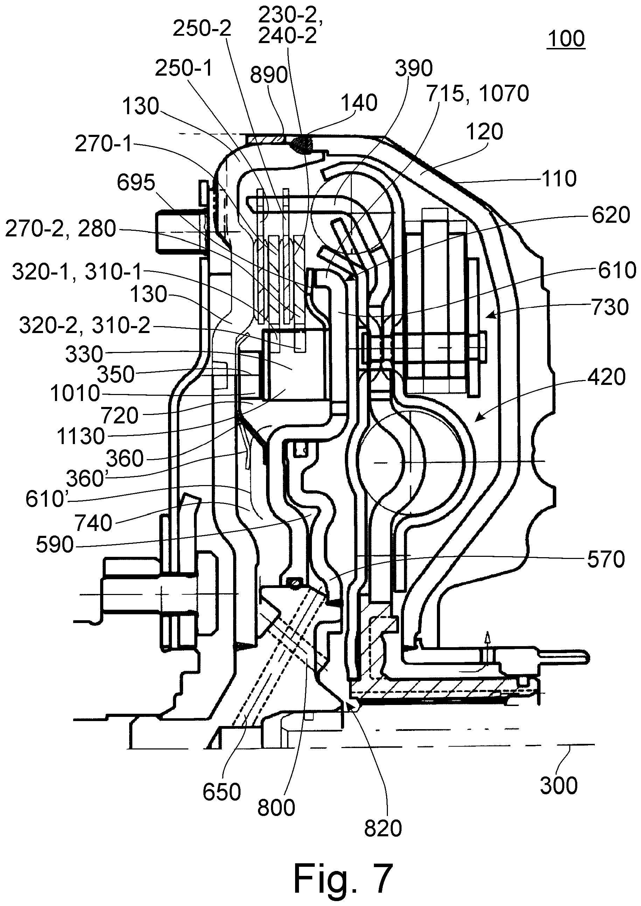

Fig. 7 zeigt eine Querschnittsdarstellung durch eine weitere Kupplungsanordnung 100 gemäß einem Ausführungsbeispiel, die sich von der in Fig. 3 gezeigten Kupplungsanordnung 100 im Hinblick auf mehrere Details unterscheidet. So weist die Kupplungsanordnung 100 aus Fig. 7 beispielsweise eine veränderte Führung des flüssigen Mediums in das zweite Volumen 740 auf. So erstreckt sich der Zuleitungskanal 800 ausgehend von dem Zuflussbereich 820 zu dem zweiten Volumen 740 schräg zu der Drehachse 300. Auch die Zulaufbohrung 650 zu dem Kolbendruckraum 590 ist verändert angeordnet.

Darüber hinaus ist auch das Wuchtgewicht 890 nunmehr nicht mehr auf der ersten Gehäuseschale 120 angeordnet, sondern vielmehr auf der zweiten Gehäuseschale 130, welche sich entlang der radialen Richtung weniger weit als die erste Gehäuseschale 120 nach außen erstreckt. So ist das Wuchtgewicht 890 benachbart zu der Schweißverbindung 140 derart angeordnet, dass dieses im Wesentlichen mit einem Außendurchmesser der ersten Gehäuseschale 120 fluchtet.

Ebenso unterscheidet sich die genaue Ausgestaltung des Schwingungsdämpfers 420 von der des in Fig. 3 gezeigten Schwingungsdämpfers 420, wobei sich jedoch die beiden Schwingungsdämpfer 420 aus den beiden unterschiedlichen Kupplungsanordnungen 100 hinsichtlich ihrer Funktionsweise nicht voneinander unterscheiden. Auch die genaue Ausgestaltung der Trennwand 570, welche das Teilvolumen 730 von dem Kolbendruckraum 590 trennt, unterscheidet sich zwischen den beiden Kupplungsanordnungen 100.

Allerdings unterscheiden sich die beiden Ausführungsbeispiele einer Kupplungsanordnung 100 im Hinblick auf die Anordnung und Ausgestaltung der Innenlamellen 270 und der Außenlamellen 250 nicht voneinander. Ebenso weist die in Fig. 7 gezeigte Kupplungsanordnung 100 ein Dichtelement 360 auf, welches das erste Volumen 720 von dem zweiten Volumen 740 trennt. Das Dichtelement 360 weist auch hier Blattfederelemente 1010 auf, über die eine im Wesentlichen drehfeste Verbindung zwischen der zweiten Gehäuseschale 130 mit der oder den Förderflächen 330 geschaffen wird.

Allerdings unterscheiden sich die beiden Kupplungsanordnungen 100 insbesondere im Hinblick auf die Ausgestaltung des Anpresselements 620. So ähnelt die Ausgestaltung des Anpresselements 620 eher der des in Fig. 7 gezeigten Ausführungsbeispiels einer Kupplungsanordnung 100. So weist der Kolben 610 des Anpresselements 620 ebenso eine Anpressstruktur 715 auf, die einen sich im Wesentlichen vollständig um die Drehachse 300 herum erstreckenden Vorsprung 1070 aufweist. Dieser wird aufgrund seiner Ausgestaltung auch als Kolbenkragen bezeichnet. Der Vorsprung 1070 ist hierbei an einem radial außen gelegenen Bereich des Anpresselements 620 angeordnet, wobei sich der Vorsprung 1070 bezogen auf die ersten und zweiten Reibflächen 230, 240 im Wesentlichen im Bereich einer Mitte einer gemeinsamen, flächenmäßig größten und als wenigstens ringsegmentförmig ausgestalteten Berührfläche der beiden Reibflächen 230, 240 angeordnet ist. Anders ausgedrückt befindet sich der Vorsprung 1070 entlang der radialen Richtung etwa auf Höhe der wenigstens kreisbogenförmigen Mittellinie der bezeichneten Berührfläche. Selbstverständlich können bei anderen Ausführungsbeispielen entsprechende Abweichungen der Position der Anpressstruktur 715 bzw. ihres Vorsprungs 1070 implementiert werden.

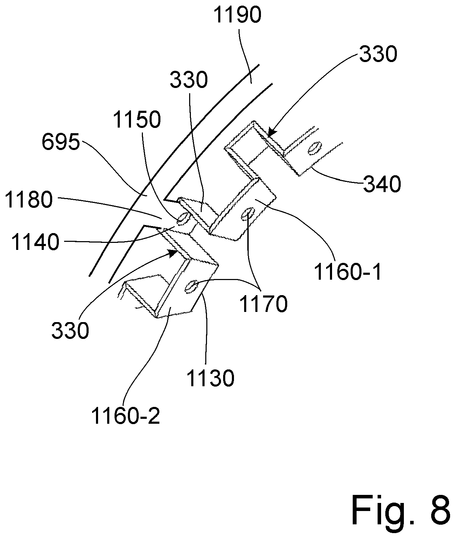

Bei dem in Fig. 7 gezeigten Ausführungsbeispiel einer Kupplungsanordnung 100 umfasst das Anpresselement 620 ferner ein weiteres Bauteil 1130, welches sowohl die Förderfläche 330 als auch die Federstruktur 695 umfasst. Das weitere Bauteil 1130 ist einteilig ausgeführt, wie dies im Zusammenhang mit Fig. 8 näher erläutert wird. Das weitere Bauteil 1130 ist hierbei über die Blattfederelemente 1010 mit der typischerweise motorseitig angebrachten zweiten Gehäuseschale 130 im Wesentlichen drehfest verbunden. Das weitere Bauteil 1130 ist ferner mit dem Kolben 610 des Anpresselements 620 drehfest, beispielsweise durch eine formschlüssige und/oder stoffschlüssige Verbindung verbunden.

Fig. 7 zeigt darüber hinaus eine Verformung des Dichtelements 360, welches in die als Position 360' eingezeichneter Position übergeht, wenn der Kolben 610 des Anpresselements 620 in die als Position 610' bezeichnete Position verfährt. Im Hinblick auf die weiteren Merkmale der Kupplungsanordnung 100 sei an dieser Stelle auf die zuvor beschriebenen Ausführungsbeispiele, insbesondere auf die in den Figuren 3 und 4 verwiesen.

Fig. 8 zeigt eine perspektivische Darstellung des weiteren Bauteils 1130 sowie eines zusätzlich implementierten, jedoch in der Querschnittsdarstellung der Fig. 7 nicht erkennbares Förderbauteil 340. Sowohl das Förderbauteil 340, wie auch das weitere Bauteil 1130 weisen hierbei jeweils wenigstens eine Förderfläche 330 auf, über die das flüssige Medium in dem ersten Volumen 720 durch eine Relativbewegung zu diesem in einen Strom versetzt werden kann. Das Förderbauteil 340 ist hierbei als mehrteiliges, aus einzelnen Segmenten aufgebautes, zusätzliches Bauteil implementiert, welches entlang der Umfangsrichtung der Kupplungsanordnung 100 angeordnet ist.

Das weitere Bauteil 1130 weist zwischen zwei benachbarten, jedoch entlang der Umfangsrichtung in entgegengesetzte Richtungen orientierten Förderflächen 330 jeweils eine Deckfläche 1140 auf, welche der Deckfläche 960 des Förderbauteils 340 aus Fig. 2 ähnelt. Im Unterschied zu der dort gezeigten Deckfläche 960 weist die Deckfläche 1140 des weiteren Bauteils 1130 jedoch eine Öffnung 1150 auf, welchen der ersten Gehäuseschale 110, also der Getriebeseite der Kupplungsanordnung 100 zugewandt ist, und mit deren Hilfe das weitere Bauteil 1130 an dem Kolben 610 des Anpresselements 620 anbringbar ist. Entsprechend weist das weitere Bauteil 1130 ebenso an einer der ersten Gehäuseschale 120 und damit dem Motor zugewandten Seite jeweils einen Abschnitt 1160-1, 1160-2 auf, die jeweils ebenso eine Öffnung 1170 aufweisen, mit deren Hilfe das weitere Bauteil 1130 mit den Blattfedern 1010 des Dichtelements 360 motorseitig verbindbar ist. Ebenso erlauben es die Öffnungen 1170, das weitere Bauteil 1130 mit dem Förderbauteil 340 bzw. seinen Segmenten zu verbinden.

Anstelle der beschriebenen Nietverbindungen können selbst verständlich auch andere Verbindungstechniken zur Verbindung der betreffenden Bauteile miteinander oder auch mit anderen Bauteilen verwendet werden. Neben Steckverbindungen und anderen formschlüssigen Verbindungstechniken können so beispielsweise alternativ oder ergänzend auch stoffschlüssige Verbindungen, also beispielsweise eine Verschweißung, zum Einsatz kommen.

Das weitere Bauteil 1130 weist ferner einen oder mehrere Verbindungsabschnitte je 1180 auf, von denen in Fig. 8 lediglich ein einzelner Verbindungsabschnitt 1180 eingezeichnet ist. Dieser schließt sich an die Deckfläche 1140 an und verbindet diese mit einer tellerfederartigen Struktur 1190. Diese ist bei dem in Fig. 8 gezeigten Ausführungsbeispiel genauer gesagt über drei entlang der Umfangsrichtung äquidistant verteilte Verbindungsabschnitte 1180 mit entsprechenden Deckflächen 1140 des weiteren Bauteils 1130 verbunden. Die Verbindungsabschnitte 1180 dienen hierbei zur Fixierung der Position der tellerfederartigen Struktur 1190, weshalb diese auch als Zentrierabschnitte bezeichnet werden. Die tellerfederartige Struktur 1190 erstreckt sich hierbei im Wesentlichen entlang des vollständigen Umfangs der Kupplungsanordnung 100, also entlang eines Winkels von 360° in einem geschlossenen Kreis. Die tellerfederartige Struktur 1190 wird daher auch als Tellerfeder-Grundkörper bezeichnet.

Die tellerfederartige Struktur 1190 stellt hierbei eine Ausführungsform einer Biegefederstruktur dar, welche ein Teil der Federstruktur 695 darstellt. Durch die Implementierung des weiteren Bauteils 1130 zusammen mit einem oder mehreren Segmenten des Förderbauteils 340 wird so eine mehrteilige Ausführung einer Förder- und Mitnehmerstruktur erzielt, bei der gleichzeitig die Federwirkung der Federstruktur 695 mit integrierbar ist.

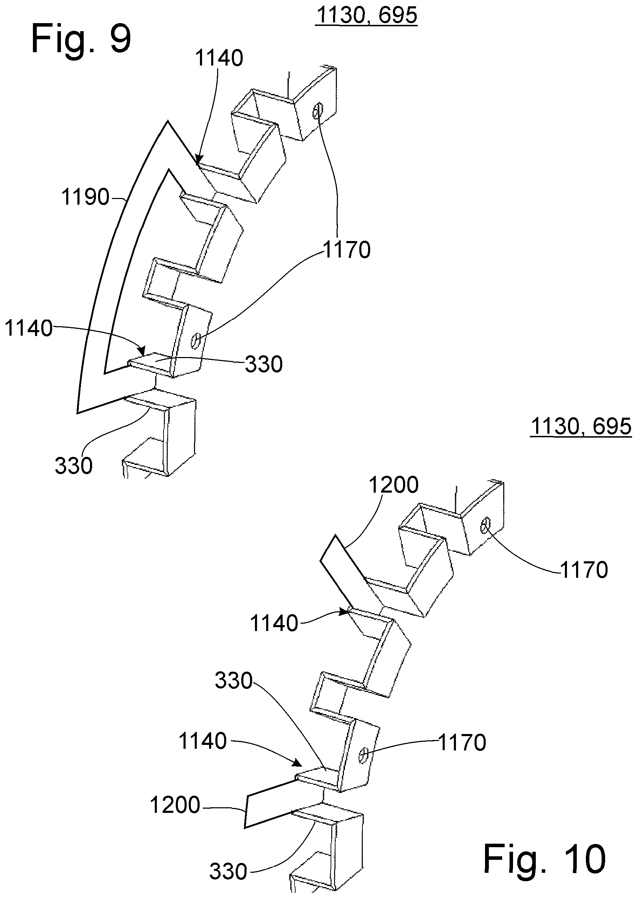

Fig. 9 zeigt eine perspektivische Darstellung einer weiteren Ausführungsform des weiteren Bauteils 1130 dar, wie es im Zusammenhang mit der in Fig. 7 Querschnitt gezeigten Kupplungsanordnung 100 zum Einsatz kommen kann. Das weitere Bauteil 1130 ist hierbei als im Wesentlichen vollständig ringförmige Struktur ausgestaltet, welche eine regelmäßige Abfolge von Förderflächen 330 entlang des Umfangs des weiteren Bauteils 1130 aufweist. Die Förderflächen 330, die ebenfalls zum Antrieb des Bauteils 280 dienen und daher Teil der bereits zuvor erwähnten Verzahnung sind, sind hierbei im Wesentlichen senkrecht zu der Umfangsrichtung bzw. der tangentialen Richtung des weiteren Bauteils 1130 und damit der Kupplungsanordnung 100 ausgerichtet.

Das weitere Bauteil 1130 weist ferner eine im Wesentlichen tellerfederartige Struktur 1190 auf, welche mit den Deckflächen 1140 des weiteren Bauteils 1130 verbunden ist und sich radial nach außen erstreckt. Hierbei ist die tellerfederartige Struktur 1190 nicht mit jeder Deckfläche 1140, sondern lediglich mit jeder zweiten entlang der Umfangsrichtung verbunden. Selbstverständlich können bei anderen Ausführungsbeispielen auch mehrere oder wenigere Abdeckflächen 1140 mit der tellerfederartigen Struktur 1190 verbunden sein.

Das weitere Bauteil 1130 bildet hierbei die Federstruktur 695 des Anpresselements 620, wobei die tellerfederartige Struktur 1190 im vorliegenden Fall eine Mehrzahl ringförmig ausgebildeter Segmente umfasst. Aufgrund der im Wesentlichen sich vollständig entlang der Umfangsrichtung erstreckenden Ausgestaltung des weiteren Bauteils 1130 kann bei diesem die Anzahl von Öffnungen 1170 zur Befestigung desselben reduziert werden. Auch zeigt Fig. 9 keine den Öffnungen 1150 entsprechenden Öffnungen, wobei das weitere Bauteil 1130 gegebenenfalls mithilfe einer Schweißverbindung oder einer anderen Verbindungstechnik verbunden werden kann.

Fig. 10 zeigt schließlich eine weitere Ausgestaltungsform des weiteren Bauteils 1130, welches wiederum die Federstruktur 695 umfasst. Anstelle der in Fig. 9 gezeigten tellerfederartigen Struktur 1190 weist das weitere Bauteil 1130 hier eine Mehrzahl blattfederartige Strukturen 1200 auf, die sich ausgehend von den Deckflächen 1140 radial nach außen erstrecken.

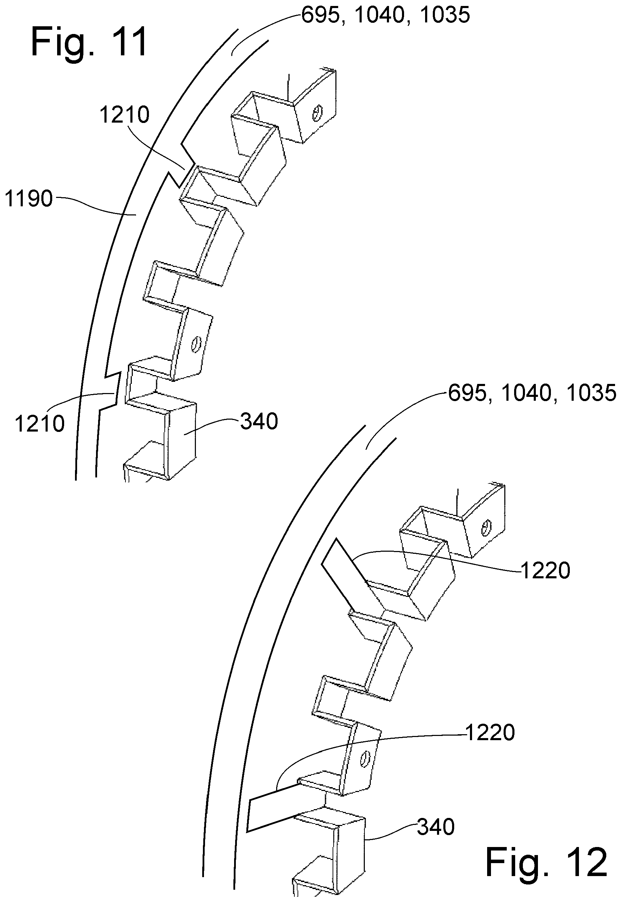

Fig. 11 zeigt eine weitere Ausgestaltung einer Federstruktur 695 im Zusammenspiel mit einem Förderbauteil 340, wie es beispielsweise ebenso im Rahmen der in Fig. 7 gezeigten Kupplungsanordnung 100 zum Einsatz kommen kann. Hierbei ersetzt das Förderbauteil 340, welches ebenfalls der Lamellenmitnahme dient, das weitere Bauteil 1130. So zeigt Fig. 11 ein Ausführungsbeispiel, bei dem die Federstruktur 695 wiederum als tellerfederartige Struktur 1190 ausgebildet ist, bei der jedoch zur Zentrierung der Federstruktur 695 an einem Innendurchmesser derselben eine Mehrzahl von Zungen 1210 angeordnet sind, welche mit den Seitenflächen des Förderbauteils 340 in Kontakt stehen und so eine Zentrierung der Federstruktur 695 ermöglichen. Die Federstruktur 695 ist hierbei als Anlege-Tellerfeder 1040 ausgeführt, welche jedoch zusätzlich zu einer konventionellen Anlege-Tellerfeder die Zungen 1210 an ihrem Innendurchmesser aufweist. Die Federstruktur 695 ist somit als separates Federelement 1035 ausgeführt.

Fig. 12 zeigt eine perspektivische Darstellung einer weiteren Implementierung einer Federstruktur 695, bei der wiederum als separates Federelement 1035 eine Anlage-Tellerfeder 1040 zum Einsatz kommt. Das Förderbauteil 340, welches hier zum Einsatz kommt, umfasst eine Mehrzahl von Zungen 1220, welche an dem Förderbauteil 340 radial nach außen angeordnet sind. Die Tellerfeder 1040 kann hierbei über ein Anliegen der Zungen 1220 an ihrer radialen Begrenzungsfläche wiederum zentriert werden. Auch hier dient das Förderbauteil 340 wiederum der Lamellenmitnahme, genauer gesagt der Mitnahme der Innenlamellen 270.

Kupplungsanordnungen 100 können für unterschiedliche Kupplungsanwendungen vorgesehen werden, beispielsweise für Fahrzeuge mit einem im vorderen Bereich des Fahrzeugs eingebauten und quer zur Fahrtrichtung ausgebildeten Automatikgetriebe. Kupplungsanordnungen 100 gemäß einem Ausführungsbeispiel können so als Anfahrkupplungen, jedoch auch als Trennkupplungen im Zusammenhang mit synchronisierten Getrieben oder im Zusammenhang mit längs eingebauten Motoren verwendet werden. Als flüssiges Medium kann beispielsweise ein Öl dienen.

Die oben beschriebenen Ausführungsbeispiele stellen hierbei lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, wie anhand der Beschreibung und der Erläuterung der Ausführungsbeispiele hierin präsentiert wurden, beschränkt sei.

Bezugszeichen

| | |
|---|---|
| 100 | Kupplungsanordnung |
| 110 | Gehäuse |
| 120 | erste Gehäuseschale |
| 130 | zweite Gehäuseschale |
| 140 | Schweißverbindung |
| 150 | Antriebsbauteil |
| 160 | Anschweißschraube |
| 170 | Innenfläche |
| 180 | Reibpaket |
| 190 | Abtriebsbauteil |
| 200 | untere Nabe |
| 210 | Innenverzahnung |
| 220 | Innenfläche |
| 230 | erste Reibfläche |
| 240 | zweite Reibfläche |
| 250 | Außenlamelle |
| 260 | Reibbelag |
| 270 | Innenlamelle |
| 280 | Bauteil |
| 300 | Drehachse |
| 305 | Durchlassöffnung |
| 310 | Abschnitt |
| 320 | Mitnehmerfläche |
| 330 | Förderfläche |
| 340 | Förderbauteil |
| 350 | Nietverbindung |
| 360 | Dichtelement |
| 370 | Abschnitt |
| 380 | weitere Mitnehmerfläche |
| 390 | Träger |
| 400 | Nietverbindung |
| 410 | erste Nabenscheibe |
| 420 | Schwingungsdämpfer |
| 430 | erstes Federelement |
| 440 | Schraubenfeder |
| 450 | erstes Abdeckblech |
| 460 | zweites Abdeckblech |
| 470 | Langloch |
| 480 | weitere Nietverbindung |
| 490 | Distanzstück |
| 500 | Distanzstück |
| 510 | Langloch |
| 520 | zweite Nabenscheibe |
| 530 | zweites Federelemente |
| 540 | Schraubenfeder |
| 550 | Lager |
| 560 | Abschnitt |
| 565 | weiteres Lager |
| 570 | Trennwand |
| 580 | vordere Nabe |
| 590 | Kolbendruckraum |
| 600 | Kolbenfläche |

| 610 | Kolben |
| 620 | Anpresselement |
| 630 | Dichtelement |
| 640 | Dichtelement |
| 650 | Zulaufbohrung |
| 660 | Dichtfläche |
| 670 | Dichtfläche |
| 680 | erste Anpressfläche |
| 685 | Verbindungsabschnitt |
| 690 | Kolbenzunge |
| 695 | Federstruktur |
| 700 | zweite Anpressfläche |
| 710 | Abschnitt |
| 715 | Anpressstruktur |
| 720 | erstes Volumen |
| 730 | Teilvolumen |
| 740 | zweites Volumen |
| 750 | Oberflächenabschnitt |
| 760 | Kolbenrückseite |
| 770 | erste Dichtfläche |
| 780 | zweite Dichtfläche |
| 790 | Übergangsabschnitt |
| 800 | Zuleitungskanal |
| 810 | Zuführung |
| 820 | Zuflussbereich |
| 830 | Abflussbereich |
| 840 | Pumpennabe |
| 850 | Dichtelement |
| 860 | Öffnung |
| 870 | Verschweißung |
| 880 | Verschweißung |
| 890 | Wuchtgewicht |
| 900 | Distanzscheibe |
| 910 | ebener Abschnitt |
| 920 | Verschweißung |
| 930 | Ausnehmung |
| 940 | Zahn |
| 950 | Abschnitt |
| 960 | Deckfläche |
| 970 | Öffnung |
| 990 | Nietverbindung |
| 1000 | weitere Nietverbindung |
| 1010 | Blattfederelemente |
| 1015 | Verbindungsbauteil |
| 1020 | Tellerfeder |
| 1030 | Volumen |
| 1035 | Federelement |
| 1040 | Anlege-Tellerfeder |
| 1050 | Schulter |
| 1060 | Kragenstruktur |
| 1070 | Vorsprung |
| 1080 | Getriebeeingangswelle |
| 1090 | Außenverzahnung |
| 1100 | Nut mit Dichtelement |
| 1110 | Zulaufkanal |
| 1120 | Anschlussbohrung |
| 1130 | weiteres Bauteil |
| 1140 | Deckfläche |

1150 Öffnung
1160 Abschnitt
1170 Öffnung
1180 Verbindungsabschnitt
1190 tellerfederartige Struktur
1200 blattfederartige Struktur
1210 Zunge
1220 Zunge

**Patentansprüche**

1. Kupplungsanordnung (100), beispielsweise für einen Antriebsstrang eines Fahrzeugs, mit folgenden Merkmalen:

eine erste Reibfläche (230) und eine zweite Reibfläche (240), die relativ zueinander entlang einer Drehachse (300) der Kupplungsanordnung (100) beweglich angeordnet und derart ausgebildet sind, um miteinander in einen Reibeingriff bringbar zu sein, um ein Drehmoment von der ersten Reibfläche (230) auf die zweite Reibfläche (240) übertragbar zu machen, wobei die erste Reibfläche (230) oder die zweite Reibfläche (240) an einem Bauteil (280) angeordnet sind; und

einem Anpresselement (620), das ausgebildet ist, um auf eine Betätigung hin den Reibeingriff durch ein Bewirken einer Kraft entlang der Drehachse (300) zu schaffen oder zu trennen;
wobei das Anpresselement (620) eine Federstruktur (695) umfasst, die derart ausgebildet und angeordnet ist, um durch eine Formänderung auf das Bauteil (280) wenigstens teilweise die Kraft zu bewirken;
wobei das Anpresselement (620) ferner eine Anpressstruktur (715) umfasst, die ausgebildet ist, sodass diese eine Formänderung der Federstruktur (695) begrenzt;
wobei die erste und die zweite Reibfläche (230, 240) ausgebildet sind, um in einem Betrieb mit einem flüssigen Medium in Kontakt zu stehen;
**dadurch gekennzeichnet, dass**
die Kupplungsanordnung (100) die ferner ein Förderbauteil (340) umfasst, das wenigstens eine Förderfläche (330) aufweist, wobei die Förderfläche (330) derart ausgebildet ist, dass diese einen Strom des flüssigen Mediums bei einer Drehung relativ zu dem flüssigen Medium bewirkt, wobei die Federstruktur (695) durch ein separates Federelement (1035), beispielsweise eine Anlege-Tellerfeder (1040), gebildet ist, und wobei das Förderbauteil (340) und/oder das Federelement (1035) derart ausgebildet sind, sodass das Federelement (1035) über das Förderbauteil (340) zentrierbar ist; oder
wobei das Anpresselement (620) eine Förderfläche (330) für das flüssiges Medium umfasst, und bei der die Förderfläche (330) derart ausgebildet ist, dass diese einen Strom des flüssigen Mediums bei einer Drehung relativ zu dem flüssigen Medium bewirkt, und wobei das Anpresselement (620) derart ausgebildet ist, sodass die Förderfläche (330) und die Federstruktur (695) einteilig ausgeführt sind.

2. Kupplungsanordnung (100) nach Anspruch 1, bei der die Federstruktur (695) eine Biegefederstruktur, beispielsweise eine blattfederartige (1200), eine tellerfederartige (1190), eine tellerfedersegmentartige, eine membranfederartige oder eine membranfedersegmentartige Struktur, umfasst, die ausgebildet ist, um die Kraft durch ein Verbiegen entlang der Drehachse (300) zu bewirken.

3. Kupplungsanordnung (100) nach einem der vorhergehenden Ansprüche, bei der die erste (230) und die zweite Reibfläche (240) eine gemeinsame, flächenmäßig größte, wenigstens ringsegmentförmige Berührfläche aufweisen, an der die erste (230) und die zweite Reibfläche (240) einander berühren, wenn der Reibeingriff besteht, und bei der die Anpressstruktur (715) derart ausgebildet ist, dass sich durch die Begrenzung der Formänderung der Federstruktur (695) in einem vordefinierten Zustand der Kupplungsanordnung (100) ein effektiver Reibradius ergibt, der von einer wenigstens kreisbogenförmigen Mittellinie der Berührfläche höchstens 40 % einer Breite derselben beabstandet ist.

4. Kupplungsanordnung (100) nach einem der vorhergehenden Ansprüche, bei der die Federstruktur (695) und die Anpressstruktur (715) derart ausgebildet sind, dass die Federstruktur (695) auch dann wenigstens teilweise die Kraft auf das Bauteil (280) überträgt, wenn die Anpressstruktur (715) die Formänderung der Federstruktur (695) begrenzt.

5. Kupplungsanordnung (100) nach Anspruch 4, bei der die Federstruktur (695) und die Anpressstruktur (715) derart ausgebildet sind, dass die Federstruktur (695) die Kraft auf das Bauteil (280) im Wesentlichen vollständig überträgt, wenn die Anpressstruktur (715) die Formänderung der Federstruktur (695) begrenzt.

6. Kupplungsanordnung (100) nach einem der vorhergehenden Ansprüche, bei der die Anpressstruktur (715) derart ausgebildet ist, dass die Anpressstruktur (715) mit der Federstruktur (695) in Kontakt tritt, wenn die Federstruktur (695) einen vorbestimmten Grad der Formänderung erreicht, um die Formänderung der Federstruktur (695) zu begrenzen.

7. Kupplungsanordnung (100) nach Anspruch 6, bei der die Anpressstruktur (715) einen der Federstruktur (695) zugewandten Vorsprung (1070) aufweist, der derart ausgebildet ist, dass die Anpressstruktur (1070) mit dem Vorsprung (1070) mit der Federstruktur (695) in Kontakt tritt.

8. Kupplungsanordnung (100) nach einem der vorhergehenden Ansprüche, bei der das Anpresselement (620) ferner einen Verbindungsabschnitt (685) umfasst, der ausgebildet ist, um eine mechanische Verbindung zwischen der Federstruktur (695) und der Anpressstruktur (715) zu bilden, und bei der in einem im Wesentlichen entspannten Zustand der Federstruktur (695), bei dem die Federstruktur (695) das Bauteil (280) berührt und mit dem Verbindungsabschnitt (685) verbunden ist, ein erster Abstand (S1) entlang der Drehachse (300) zwischen der Federstruktur (695) und dem Bauteil (280) auf Höhe der Verbindungsstruktur (685) wenigstens einem kleinsten, zweiten Abstand (S2) zwischen der Anpressstruktur (715) und der Federstruktur (695) entspricht.

9. Kupplungsanordnung (100) nach einem der vorhergehenden Ansprüche, bei der die Federstruktur (695) durch ein separates Federelement (1035), beispielsweise eine Anlege-Tellerfeder (1040), gebildet ist, und bei der das Anpresselement (620) eine Schulter (1050) aufweist, die derart ausgebildet und angeordnet ist, dass das Federelement (1035) mit der Schulter (1050) in Kontakt steht, um die Kraft wenigstens teilweise auf das Bauteil (280) zu übertragen.

10. Kupplungsanordnung (100) nach einem der vorhergehenden Ansprüche, bei der die Anpressstruktur (715) derart ausgebildet und angeordnet ist, dass die Anpressstruktur (715) mit dem Bauteil (280) in Kontakt steht, wenn die Anpressstruktur (715) die Formänderung der Federstruktur (695) begrenzt.

11. Kupplungsanordnung (100) nach einem der vorhergehenden Ansprüche, bei der die Förderfläche (330) derart ausgebildet und angeordnet ist, dass diese Teil einer Verzahnung ist, über die die erste Reibfläche (230) antreibbar ist.

12. Kupplungsanordnung (100) nach einem der vorhergehenden Ansprüche, bei der die Förderfläche (330) im Wesentlichen senkrecht zu einer tangentialen Richtung ausgerichtet ist, die senkrecht auf der Drehachse (300) und einer von der Drehachse (300) senkrecht wegweisenden radialen Richtung steht.

13. Kupplungsanordnung (100) nach einem der vorhergehenden Ansprüche, bei der die Federstruktur (695) eine erste Anpressfläche (680) und die Anpressstruktur (715) eine zweite Anpressfläche (700) aufweist, wobei die erste Anpressfläche (680) an einer dem Bauteil (280) zugewandten Seite der Federstruktur (695) angeordnet und derart ausgebildet ist, sodass die erste Anpressfläche (680) mit dem Bauteil (280) in Kontakt steht und über die erste Anpressfläche (680) die Kraft wenigstens teilweise stets dann bewirkt wird, wenn das Anpresselement (620) den Reibeingriff schafft, und wobei die zweite Anpressfläche (700) an einer dem Bauteil (280) zugewandten Seite der Anpressstruktur (715) angeordnet und derart ausgebildet ist, sodass die zweite Anpressfläche (700) mit dem Bauteil (280) in Kontakt steht und über die zweite Anpressfläche (700) die Kraft wenigstens teilweise bewirkt wird, wenn die Anpressstruktur (715) die Formänderung der Federstruktur (695) begrenzt.

14. Kupplungsanordnung (100) nach Anspruch 13, bei der das Anpresselement (620) derart ausgebildet ist, dass eine Gesamtfläche der Projektionen der ersten Anpressfläche (680) und der zweiten Anpressfläche (700) im Wesentlichen vollständig eine Projektion einer Überlappfläche der ersten (230) und der zweiten Reibfläche (240) umfasst.

15. Kupplungsanordnung (100) nach einem der Ansprüche 13 oder 14, bei der die Anpressstruktur (715) und die Federstruktur (695) einstückig ausgebildet sind.

16. Kupplungsanordnung (100) nach Anspruch 15, bei der die Anpressstruktur (715) und die Federstruktur (695) aus einem blechartigen Bauteil gefertigt sind, wobei die Federstruktur (695) als eine Ausstellung aus dem blechartigen Bauteil ausgeführt ist.

17. Kupplungsanordnung (100) nach einem der Ansprüche 12 bis 16, bei der die erste (680) und die zweite Anpressfläche (700) derart ausgebildet sind, dass das Anpresselement (620) im Wesentlichen entlang seines vollständigen Umfangs auf Höhe seines effektiven Reibradius mit dem Bauteil (280) in Kontakt steht, wenn die Anpressstruktur (715) die Formänderung der Federstruktur (695) begrenzt.

## Claims

1. Clutch arrangement (100), for example for a drive train of a vehicle, having the following features:

   a first friction face (230) and a second friction face (240) which are arranged such that they can be moved relative to one another along a rotational axis (300) of the clutch arrangement (100) and are configured such that they can be brought into frictional engagement with one another, in order to make it possible for a torque to be transmitted from the first friction face (230) to the second friction face (240), the first friction face (230) or the second friction face (240) being arranged on a component (280); and
   a pressing element (620) which is configured, upon an actuation, to produce or to disconnect the frictional engagement by way of a force being brought about along the rotational axis (300);
   the pressing element (620) comprising a spring structure (695) which is configured and arranged so as to bring about the force at least partially on the component (280) by way of a shape change;
   the pressing element (620) comprising, furthermore, a pressing structure (715) which is configured such that it limits a shape change of the spring structure (695);
   the first and the second friction face (230, 240) being configured to be in contact with a liquid medium during operation;
   **characterized in that**
   the clutch arrangement (100) which comprises, furthermore, a conveying component (340) which has at least one conveying face (330), the conveying face (330) being configured such that it brings about a flow of the liquid medium in the case of a rotation relative to the liquid medium, the spring structure (695) being formed by way of a separate spring element (1035), for example a holding cup spring (1040), and
   the conveying component (340) and/or the spring element (1035) being configured such that the spring element (1035) can be centred via the conveying component (340) ;
   or
   the pressing element (620) comprising a conveying face (330) for the liquid medium, and in the case of which the conveying face (330) is configured such that it brings about a flow of the liquid medium in the case of a rotation relative to the liquid medium, and the pressing element (620) being configured such that the conveying face (330) and the spring structure (695) are configured in one piece.

2. Clutch arrangement (100) according to Claim 1, in the case of which the spring structure (695) comprises a flexible spring structure, for example a leaf spring-like structure (1200), a cup spring-like structure (1190), a cup spring segment-like structure, a diaphragm spring-like structure or a diaphragm spring segment-like structure which is configured to bring about the force by way of bending along the rotational axis (300).

3. Clutch arrangement (100) according to one of the preceding claims, in the case of which the first friction face (230) and the second friction face (240) have a common contact area which is largest in area terms, is at least annular segment-shaped, and on which the first friction face (230) and the second friction face (240) make contact with one another when the frictional engagement is in existence, and in the case of which the pressing structure (715) is configured in such a way that an effective friction radius results in a predefined state of the clutch arrangement (100) by way of the limiting of the shape change of the spring structure (695), which effective friction radius is spaced apart from an at least circularly arcuate centre line of the contact area by at most 40% of a width thereof.

4. Clutch arrangement (100) according to one of the preceding claims, in the case of which the spring structure (695) and the pressing structure (715) are configured in such a way that the spring structure (695) transmits the force to the component (280) at least partially even when the pressing structure (715) limits the shape change of the spring structure (695).

5. Clutch arrangement (100) according to Claim 4, in the case of which the spring structure (695) and the pressing structure (715) are configured in such a way that the spring structure (695) transmits the force to the component (280) substantially completely when the pressing structure (715) limits the shape change of the spring structure (695).

6. Clutch arrangement (100) according to one of the preceding claims, in the case of which the pressing structure (715) is configured in such a way that the pressing structure (715) comes into contact with the spring structure (695) when the spring structure (695) reaches a predefined degree of shape change, in order to limit the shape change of the spring structure (695) .

7. Clutch arrangement (100) according to Claim 6, in the case of which the pressing structure (715) has a projection (1070) which faces the spring structure (695) and is configured in such a way that the pressing structure (1070) comes into contact by way of the projection (1070) with the spring structure (695).

8. Clutch arrangement (100) according to one of the preceding claims, in the case of which, furthermore, the pressing element (620) comprises a connecting section (685) which is configured to form a mechanical connection between the spring structure (695) and the pressing structure (715), and in the case of which, in a substantially relieved state of the spring structure (695), in the case of which state the spring structure (695) makes contact with the component (280) and is connected to the connecting section (685), a first spacing (S1) along the rotational axis (300) between the spring structure (695) and the component (280) at the level of the connecting structure (685) corresponds at least to a smallest, second spacing (S2) between the pressing structure (715) and the spring structure (695) .

9. Clutch arrangement (100) according to one of the preceding claims, in the case of which the spring structure (695) is formed by way of a separate spring element (1035), for example a holding cup spring (1040), and in the case of which the pressing element (620) has a shoulder (1050) which is configured and arranged in such a way that the spring element (1035) is in contact with the shoulder (1050), in order to transmit the force at least partially to the component (280) .

10. Clutch arrangement (100) according to one of the preceding claims, in the case of which the pressing structure (715) is configured and arranged in such a way that the pressing structure (715) is in contact with the component (280) when the pressing structure (715) limits the shape change of the spring structure (695) .

11. Clutch arrangement (100) according to one of the preceding claims, in the case of which the conveying face (330) is configured and arranged in such a way that it is part of a toothing system, via which the first friction face (230) can be driven.

12. Clutch arrangement (100) according to one of the preceding claims, in the case of which the conveying face (330) is oriented substantially perpendicularly with respect to a tangential direction which lies perpendicularly on the rotational axis (300) and a radial direction which points perpendicularly away from the rotational axis (300).

13. Clutch arrangement (100) according to one of the preceding claims, in the case of which the spring structure (695) has a first pressing face (680) and the pressing structure (715) has a second pressing face (700), the first pressing face (680) being arranged on a side of the spring structure (695), which side faces the component (280), and being configured such that the first pressing face (680) is in contact with the component (280), and the force is always brought about at least partially via the first pressing face (680) when the pressing element (620) produces the frictional engagement, and the second pressing face (700) being arranged on a side of the pressing structure (715), which side faces the component (280), and being configured such that the second pressing face (700) is in contact with the component (280), and the force is brought about at least partially via the second pressing face (700) when the pressing structure (715) limits the shape change of the spring structure (695).

14. Clutch arrangement (100) according to Claim 13, in the case of which the pressing element (620) is configured in such a way that an overall area of the projections of the first pressing face (680) and the second pressing face (700) encompasses substantially completely a projection of an overlapping area of the first friction face (230) and the second friction face (240) .

15. Clutch arrangement (100) according to either of Claims 13 and 14, in the case of which the pressing structure (715) and the spring structure (695) are configured in one piece.

16. Clutch arrangement (100) according to Claim 15, in the case of which the pressing structure (715) and the spring structure (695) are manufactured from a sheet metal-like component, the spring structure (695) being configured as a protuberance from the sheet metal-like component.

17. Clutch arrangement (100) according to one of Claims 12 to 16, in the case of which the first pressing face (680) and the second pressing face (700) are configured in such a way that the pressing element (620) is in contact substantially along its complete circumference at the level of its effective friction radius with the component (280) when the pressing structure (715) limits the shape change of the spring structure (695).

**Revendications**

1. Ensemble embrayage (100), par exemple pour une chaîne cinématique d'un véhicule, présentant les caractéristiques suivantes :

   une première surface de friction (230) et une deuxième surface de friction (240) qui sont disposées de manière mobile l'une par rapport à l'autre le long d'un axe de rotation (300) de l'ensemble embrayage (100) et sont formées de manière à pouvoir être amenées en contact de friction l'une avec l'autre, afin de rendre un couple transmissible de la première surface de friction (230) à la deuxième surface de friction (240), la première surface de friction (230) ou la deuxième surface de friction (240) étant disposée sur un composant (280) ; et
   un élément de pression (620) qui est conçu pour, lors d'un actionnement, créer ou séparer le contact de friction en produisant une force le long de l'axe de rotation (300) ;
   l'élément de pression (620) comportant une structure élastique (695) qui est conçue et disposée pour produire la force au moins partiellement sur le composant (280) par un changement de forme ;
   l'élément de pression (620) comportant en outre une structure de pression (715) qui est conçue de telle sorte que celle-ci limite un changement de forme de la structure élastique (695) ;
   la première et la deuxième surface de friction (230, 240) étant conçues pour être en contact avec un milieu liquide lors d'un fonctionnement ;
   **caractérisé en ce que** l'ensemble embrayage (100) qui comporte en outre un composant de refoulement (340) qui comprend au moins une surface de refoulement (330), la surface de refoulement (330) étant formée de telle sorte qu'elle produit un flux du milieu liquide lors d'une rotation par rapport au milieu liquide, la structure élastique (695) étant formée par un élément ressort séparé (1035), par exemple une rondelle-ressort d'appui (1040), et le composant de refoulement (340) et/ou l'élément ressort (1035) étant conçus de telle sorte que l'élément ressort (1035) peut être centré par le biais du composant de refoulement (340) ;
   ou
   l'élément de pression (620) comportant une surface de refoulement (330) pour le milieu liquide, et dans lequel la surface de refoulement (330) est formée de telle sorte que celle-ci produit un flux du milieu liquide lors d'une rotation par rapport au milieu liquide, et l'élément de pression (620) étant conçu de telle sorte que la surface de refoulement (330) et la structure élastique (695) sont réalisées d'un seul tenant.

2. Ensemble embrayage (100) selon la revendication 1, dans lequel la structure élastique (695) comporte une structure élastique flexible, par exemple une structure de type ressort à lame (1200), une structure de type rondelle-ressort (1190), une structure de type segment de rondelle-ressort, une structure de type ressort à diaphragme ou une structure de type segment de ressort à diaphragme, laquelle structure est conçue pour produire la force par une flexion le long de l'axe de rotation (300) .

3. Ensemble embrayage (100) selon l'une quelconque des revendications précédentes, dans lequel la première (230) et la deuxième surface de friction (240) comprennent une surface de contact commune présentant la plus grande aire et au moins en forme de segment annulaire, au niveau de laquelle la première (230) et la deuxième surface de friction (240) sont en contact l'une avec l'autre lorsque le contact de friction existe, et dans lequel la structure de pression (715) est conçue de telle sorte que, par la limitation du changement de forme de la structure élastique (695) dans un état prédéfini de l'ensemble embrayage (100), un rayon de friction effectif se produit, lequel est espacé d'une ligne médiane, au moins en forme d'arc de cercle, de la surface de contact d'au plus 40 % d'une largeur de celle-ci.

4. Ensemble embrayage (100) selon l'une quelconque des revendications précédentes, dans lequel la structure élastique (695) et la structure de pression (715) sont conçues de telle sorte que la structure élastique (695) transmet au moins partiellement la force au composant (280) même lorsque la structure de pression (715) limite le changement de forme de la structure élastique (695) .

5. Ensemble embrayage (100) selon la revendication 4, dans lequel la structure élastique (695) et la structure de pression (715) sont conçues de telle sorte que la structure élastique (695) transmet sensiblement complètement la force au composant (280) lorsque la structure de pression (715) limite le changement de forme de la structure élastique (695).

6. Ensemble embrayage (100) selon l'une quelconque des revendications précédentes, dans lequel la structure de pression (715) est conçue de telle sorte que la structure de pression (715) vient en contact avec la structure élastique (695) lorsque la structure élastique (695) atteint un niveau prédéfini de changement de forme, afin de limiter le changement de forme de la structure élastique (695) .

7. Ensemble embrayage (100) selon la revendication 6, dans lequel la structure de pression (715) comprend une saillie (1070) tournée vers la structure élastique (695), laquelle saillie est conçue de telle sorte que la structure de pression (1070) dotée de la saillie (1070) vient en contact avec la structure élastique (695).

8. Ensemble embrayage (100) selon l'une quelconque des revendications précédentes, dans lequel l'élément de pression (620) comporte en outre une partie de liaison (685) qui est conçue pour former une liaison mécanique entre la structure élastique (695) et la structure de pression (715), et dans lequel, dans un état sensiblement détendu de la structure élastique (695), dans lequel la structure élastique (695) est en contact avec le composant (280) et est reliée à la partie de liaison (685), une première distance (S1) le long de l'axe de rotation (300) entre la structure élastique (695) et le composant (280) à hauteur de la structure de liaison (685) correspond au moins à une deuxième distance (S2) la plus petite entre la structure de pression (715) et la structure élastique (695).

9. Ensemble embrayage (100) selon l'une quelconque des revendications précédentes, dans lequel la structure élastique (695) est formée par un élément ressort séparé (1035), par exemple une rondelle-ressort d'appui (1040), et dans lequel l'élément de pression (620) comprend un épaulement (1050) qui est conçu et disposé de telle sorte que l'élément ressort (1035) est en contact avec l'épaulement (1050) afin de transmettre la force au moins partiellement au composant (280).

10. Ensemble embrayage (100) selon l'une quelconque des revendications précédentes, dans lequel la structure de pression (715) est conçue et disposée de telle sorte que la structure de pression (715) est en contact avec le composant (280) lorsque la structure de pression (715) limite le changement de forme de la structure élastique (695).

11. Ensemble embrayage (100) selon l'une quelconque des revendications précédentes, dans lequel la surface de refoulement (330) est formée et disposée de telle sorte que celle-ci fait partie d'une denture par le biais de laquelle la première surface de friction (230) peut être entraînée.

12. Ensemble embrayage (100) selon l'une quelconque des revendications précédentes, dans lequel la surface de refoulement (330) est orientée sensiblement perpendiculairement à une direction tangentielle qui est perpendiculaire à l'axe de rotation (300) et à une direction radiale s'écartant perpendiculairement de l'axe de rotation (300).

13. Ensemble embrayage (100) selon l'une quelconque des revendications précédentes, dans lequel la structure élastique (695) comprend une première surface de pression (680) et la structure de pression (715) comprend une deuxième surface de pression (700), la première surface de pression (680) étant disposée sur un côté, tourné vers le composant (280), de la structure élastique (695) et étant formée de telle sorte que la première surface de pression (680) est en contact avec le composant (280) et que, par le biais de la première surface de pression (680), la force est produite au moins partiellement chaque fois que l'élément de pression (620) créée le contact de friction, et la deuxième surface de pression (700) étant disposée sur un côté, tourné vers le composant (280), de la structure de pression (715) et étant formée de telle sorte que la deuxième surface de pression (700) est en contact avec le composant (280) et que, par le biais de la deuxième surface de pression (700), la force est produite au moins partiellement lorsque la structure de pression (715) limite le changement de forme de la structure élastique (695).

14. Ensemble embrayage (100) selon la revendication 13, dans lequel l'élément de pression (620) est conçu de telle sorte qu'une surface totale des projections de la première surface de pression (680) et de la deuxième surface de pression (700) comporte sensiblement complètement une projection d'une surface de chevauchement de la première (230) et de la deuxième surface de friction (240).

15. Ensemble embrayage (100) selon la revendication 13 ou 14, dans lequel la structure de pression (715) et la structure élastique (695) sont réalisées d'un seul tenant.

16. Ensemble embrayage (100) selon la revendication 15, dans lequel la structure de pression (715) et la structure élastique (695) sont fabriquées à partir d'une pièce de type tôle, la structure élastique (695) étant réalisée en tant que partie saillante à partir de la pièce de type tôle.

17. Ensemble embrayage (100) selon l'une quelconque des revendications 12 à 16, dans lequel la première (680) et la deuxième surface de pression (700) sont formées de telle sorte que l'élément de pression (620) est en contact avec le composant (280) sensiblement le long de toute sa périphérie à hauteur de son rayon de friction effectif, lorsque la structure de pression (715) limite le changement de forme de la structure élastique (695) .

Fig. 1

340

330-1
940
960
330-2
950
970
950

# Fig. 2

Fig. 3

Fig. 4

EP 2 809 965 B1

Fig. 5

Fig. 6

Fig. 7

1190

330

330

1150

695

340

1180

1140

1160-1

330

1170

1160-2

1130

Fig. 8

Fig. 9

1140

1190

1170

1140

330

330

1200

1170

1140

330

1140

1170

1200

330

Fig. 10

# Fig. 11

695, 1040, 1035

1210

1190

1210

340

695, 1040, 1035

1220

1220

340

# Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009016414 A1
- DE 10125628 A1
- EP 1754905 A2
- EP 1577575 A1
- EP 1798435 A1
- WO 2011045199 A1